# FASCICULE DE BREVET EUROPEEN

(11) **EP 4 110 127 B1**
(45) Date de publication et mention de la délivrance du brevet: **14.05.2025**
(21) Numéro de dépôt: 21706956.6
(22) Date de dépôt: 24.02.2021
(51) Int. Cl.: A43B 1/04, A43B 13/04, A43B 13/22, A43B 23/02, A43B 23/04, B29D 35/00, B29D 35/02, B29D 35/12

(54) **PROCÉDÉ DE FABRICATION D'UNE STRUCTURE DE SEMELLE COMPRENANT UN ÉLÉMENT DE SEMELLE TEXTILE INTÉGRALEMENT OU EN PARTIE THERMOFONDU, ET ARTICLE CHAUSSANT COMPRENANT UNE TELLE STRUCTURE DE SEMELLE**
VERFAHREN ZUR HERSTELLUNG EINER SOHLENSTRUKTUR MIT VOLLSTÄNDIG ODER TEILWEISE WARMGEFORMTEN TEXTILEN SOHLENELEMENT UND SCHUHWERK MIT SOLCH EINER SOHLENSTRUKTUR
METHOD FOR MANUFACTURING A SOLE STRUCTURE COMPRISING A FULLY OR PARTIALLY HOT-FORMED TEXTILE SOLE ELEMENT, AND FOOTWEAR ITEM COMPRISING SUCH A SOLE STRUCTURE

(30) Priorité: 25.02.2020 FR 2001850
(43) Date de publication de la demande: 04.01.2023
(73) Titulaire: Decathlon, 59650 Villeneuve d'Ascq (FR)
(72) Inventeur: VENTENAT, Vincent, 59650 VILLENEUVE D'ASCQ (FR)
(74) Mandataire: Cabinet Beau de Loménie
(86) Numéro de dépôt international: PCT/EP2021/054612
(87) Numéro de publication internationale: WO 2021/170682

(56) Documents cités:
- WO-A1-2016/115156
- US-A1- 2014 310 986
- US-A1- 2016 206 039
- US-A1- 2016 295 971
- US-A1- 2017 006 962
- US-A1- 2017 129 200
- US-A1- 2017 181 501
- US-A1- 2018 317 606

## Description

### Domaine Technique

La présente invention concerne les structures de semelle comprenant des éléments de semelle textiles intégralement ou au moins en partie thermofondus, ainsi que les articles chaussants comprenant de telles structures, et les procédés de fabrication de tels structures de semelle, et des articles chaussants les comprenant.

Les articles chaussants conventionnels comprennent généralement une tige et une structure de semelle. La tige est sécurisée à la structure de semelle et forme un vide à l'intérieur de l'article chaussant pour recevoir et sécuriser confortablement un pied. La structure de semelle est sécurisée à une zone inférieure de la tige, et disposée en fonctionnement entre le sol, et la tige. Dans les articles chaussants pour la pratique d'un sport, la structure de semelle peut comprendre une semelle d'usure et une semelle intermédiaire. La semelle intermédiaire comprend souvent un matériau en mousse polymère qui absorbe les chocs avec le sol lors d'un impact afin d'en atténuer les effets sur le pied et la jambe durant la marche, la course ou d'autres activités ambulatoires. La structure de semelle peut également comprendre une doublure positionnée à proximité de la surface inférieure du pied pour améliorer le confort de l'article chaussant. Les semelles sont traditionnellement solidarisées avec les tiges à l'aide d'un montage dénommé Strobel au-cours duquel les différents éléments de semelle (semelle de propreté, semelle intermédiaire et semelle d'usure notamment) sont assemblés. Les procédés de fabrication d'une chaussure classique nécessitent des dizaines d'étapes, et produisent de nombreux rebus issus des découpes de matériaux.

Il est recherché de simplifier les procédés de fabrication des articles chaussants, notamment en réduisant le nombre d'étapes et/ou la consommation énergétique et en matériaux. Cette problématique s'inscrit également dans la recherche d'un procédé de fabrication qui puisse être mis en œuvre au plus près du lieu d'utilisation de l'article chaussant afin de réduire son impact carbone, faciliter la gestion du stock, et permettre la personnalisation de l'article chaussant.

Une solution consiste à supprimer les étapes de couture nécessaires pour mettre en forme en trois dimensions la tige initialement plane. La tige est obtenue à partir de l'assemblage d'une ou quelques pièces, et non plus à partir de multiples pièces rapportées ensemble par couture.

WO 2019/234374 A1 propose ainsi un premier chausson textile formé en trois dimensions directement en sortie d'un métier textile (par exemple un métier à tricoter), partiellement thermofusible, faisant office de tige, puis de solidariser cette tige à une semelle d'usure. Cette tige est renforcée en disposant un second chausson textile, en trois dimensions, partiellement thermofusible, autour du premier chausson en enveloppant la jonction entre le premier chausson et la semelle d'usure afin d'améliorer la résistance à la délamination. L'ensemble comprenant les premier et second chaussons textiles et la semelle d'usure subit un traitement thermique pour fondre les fils thermofusibles et figer la forme de la tige. Le procédé de fabrication est simplifié en réduisant de manière importante le nombre d'étapes de fabrication.

Cependant, cet article chaussant, comprenant une tige résultant de la superposition de deux, trois ou quatre chaussons textiles, peut présenter un poids trop important pour la pratique de certaines activités, notamment sportives requérant le respect d'un poids spécifique pour un article chaussant déterminé. Par exemple, le poids standard des articles chaussants pour la pratique du football est de l'ordre de 165 g à 250 g.

De plus, le thermoformage d'un élément rigide, dans ce cas précis, une semelle d'usure, entre deux éléments souples, à savoir deux chaussons textiles, engendre des difficultés dans la reproductibilité du positionnement des éléments entre-eux, augmentant le taux de rebus.

Par ailleurs, la semelle d'usure et/ou une semelle intermédiaire est/sont obtenue(s) par un procédé d'injection dans lequel le nombre de matière(s) polymère(s), et le nombre de couleurs différentes, sont en pratique limités à deux pour des raisons de coût. Les possibilités de faire varier les matériaux et l'esthétisme, en particulier les couleurs, selon des régions spécifiques de la semelle, sont limitées par les coûts impliqués pour adapter le procédé d'injection d'une semelle. Afin de faciliter le démoulage, il est nécessaire que la semelle ait globalement sensiblement la même épaisseur. Des évidements de matière dans la face interne d'une semelle sont ainsi moulés afin que la quantité de matière injectée soit homogène selon toute la surface de la semelle et que la semelle ait une épaisseur sensiblement constante.

US 2016/0206046 A1 a pour objet un procédé de fabrication d'une structure de semelle comprenant l'embossage d'une feuille textile plane en sorte de déformer localement la feuille textile pour former des crampons. La feuille textile embossée a une épaisseur constante, équivalente à son épaisseur initiale avant embossage. La région de la face interne de la feuille textile embossée en regard d'un crampon n'est pas plane mais creuse. Les crampons formés étant creux, ils sont remplis par un insert en mousse pour les consolider. Cette structure de semelle est fragile puisque il est nécessaire de combler les crampons pour les renforcer. De plus, la technique de fabrication est complexe car l'outil d'embossage de la feuille textile est l'insert en mousse afin que la feuille embossée épouse parfaitement les crampons de l'insert en mousse.

US 2016/206039 a pour objet un article chaussant comprenant un système de semelle et une tige. Le système de semelle comprend un composant tricoté incorporant une semelle extérieure tricotée d'une seule pièce. La semelle extérieure en tricot présente un côté orienté vers le sol, un côté supérieur et des éléments de crampon se projetant du côté orienté vers le sol de la semelle extérieure en tricot. La partie inférieure de la tige est reliée à la partie supérieure de la semelle extérieure en tricot. Les éléments de crampon sont formés par gaufrage de la semelle extérieure en tricot.

WO 2016/115156 A1 a pour objet une méthode de fabrication d'un article chaussant comprenant le gaufrage d'une structure de semelle tricotée à l'aide d'une préforme comprenant des crampons. La méthode comprend la disposition de la structure de semelle tricotée entre une membrane flexible tendue sur un cadre et la préforme comprenant des crampons, puis l'application du vide pour obtenir le gaufrage de la structure de semelle et la formation des crampons dans ladite structure de semelle.

Il existe donc un besoin pour une structure de semelle qui soit simple à fabriquer, ayant des bonnes performances mécaniques, pouvant être fonctionnalisée à volonté dans le choix des matériaux, des couleurs, ou encore des emplacements de ces derniers, et offrant un large choix dans sa forme, notamment dans les empreintes de semelle possibles.

Il existe également un besoin pour alléger les articles chaussants, tout en améliorant leur confort, en autorisant un large éventail de fonctions possibles (renfort, amorti, bout dur,...), et ce de manière localisée sur le volume de l'article chaussant, tout en conservant les propriétés de résistances à l'abrasion, au délaminage, de souplesse,... habituellement recherchées.

### Exposé de l'invention

La présente invention a pour objet, selon un premier aspect, un procédé de fabrication d'une structure de semelle, comprenant, en accordance avec la revindication 1
(i) fournir au moins un élément de semelle textile ayant une face externe, comprenant un ou des fils au moins en partie thermofusible(s);
(ii) disposer l'élément de semelle textile dans une structure de moule comprenant une empreinte de semelle;
(iii) disposer une vessie gonflable dans la structure de moule, et gonfler la vessie gonflable pour plaquer, directement ou indirectement, la face externe de l'élément de semelle textile contre l'empreinte de semelle, et chauffer l'élément de semelle textile afin de fondre le ou les fil(s) au moins en partie thermofusible(s) et mouler sensiblement l'empreinte de semelle sur la face externe de l'élément de semelle textile;
(iv) obtention d'une structure de semelle comprenant au moins un élément de semelle textile thermo-comprimé.

Les inventeurs ont découvert de manière étonnante qu'il est possible de former une structure de semelle à partir d'au moins un élément de semelle textile intégralement ou en partie thermofusible en utilisant un procédé de thermo-compression mettant en œuvre une vessie gonflable.

Les inventeurs ont observé que ledit au moins un élément de semelle textile comprend de l'air disposé entre les fils formant sa structure ce qui permet lors de l'étape de thermo-compression de chasser cet air et ainsi faciliter sa mise en forme à chaud. L'écoulement de l'air à travers l'élément de semelle textile lors de sa thermo-compression permet d'équilibrer la répartition de la ou des matière(s) thermofondue(s) dans l'empreinte de semelle du moule. Avantageusement, ledit au moins un élément de semelle textile thermo-comprimé est moulé de manière régulière et ne comprend pas de bulle d'air ou de zone creuse.

Avantageusement, il est possible de former une structure de semelle avec une empreinte de semelle comprenant une ou des empreinte(s) négative(s) et/ou positive(s). En particulier, une empreinte positive ou négative est formée sur la structure de semelle, notamment sa face externe, par comblement de l'empreinte de semelle correspondante de la structure de moule avec la ou les matière(s) thermofondue(s) issue(s) du ou des fil(s) au moins en partie thermofusible(s).

Les empreintes positives ou négatives ne sont donc pas formées par emboutissage de l'élément de semelle textile. La structure de semelle selon l'invention présente donc une résistance mécanique (en flexion, à la perforation), et des propriétés de maintien du pied, de dureté, et de résistance à l'abrasion, améliorés comparativement à une structure de semelle textile emboutie, et ne nécessite donc pas un élément de renfort complémentaire venant combler les évidements formés pour la renforcer.

La structure de semelle selon l'invention a de préférence un volume moulé sensiblement plein. En particulier, l'empreinte de semelle de la structure de moule est destinée à venir en contact, directement ou indirectement, avec la face externe de l'élément de semelle textile. Avantageusement, il est possible de fonctionnaliser la structure de semelle avec des matériaux ayant des propriétés mécaniques (élasticité, dureté,...) et esthétique(s) (couleurs, titre des fils,....) différentes, et ce de manière différenciée et localisée dans tout le volume de la structure de semelle, ce qui n'est pas possible avec une semelle obtenue par un procédé d'injection classique si on respecte la rentabilité imposée liée au coût de fabrication des moules.

De préférence, on dispose une vessie gonflable entre la structure de moule et la face interne de l'élément de semelle textile afin que la vessie gonflée vienne en contact directement ou indirectement avec la face interne de l'élément de semelle textile.

La structure de moule est de préférence en plusieurs parties, par exemple des parties supérieures droite et gauche de moule reçoivent la vessie gonflable, et éventuellement la tige, et une partie inférieure de moule comprenant l'empreinte de semelle reçoit ledit au moins un élément de semelle textile. De préférence, la structure de moule peut être également en deux parties, une partie supérieure recevant la vessie gonflable, et éventuellement la tige, et une partie inférieure comprenant l'empreinte de semelle et recevant ledit au moins un élément de semelle textile. Cette dernière disposition permet d'optimiser les plans de joints et la qualité des finitions.

Dans un mode de réalisation, un moule mère, en particulier sous forme d'un noyau (en une ou plusieurs parties), comprenant une ou plusieurs empreinte(s) positive(s) et éventuellement une ou des empreinte(s) négative(s), est usiné ou imprimé en 3D afin d'affiner le ou les dessin(s) de la ou desdites empreinte(s) positive(s). Le moule mère est de préférence un moule dans au moins un métal ou dans alliage dudit métal.

Un moule fille, correspondant à la structure de moule selon le présent texte, est obtenu par surmoulage dudit moule mère, et comprend ainsi une ou des empreinte(s) négative(s), et éventuellement une ou des empreinte(s) positve(s). Ledit moule fille est de préférence un moule métallique (par exemple un moule de fonderie). Le moule fille pourrait être également dans un matériau polymérique, éventuellement renforcé. Dans ce dernier cas, il peut s'agir d'un matériau composite.

Cette disposition permet d'apporter plus de précision et de finesse aux empreintes formées sur la structure de semelle, et éventuellement aux empreintes formées sur le chausson textile principal et/ou le chausson textile auxiliaire. Il est effet plus facile d'apporter de la complexité aux dessins et/ou à la forme des empreintes positives du moule mère, qu'à des empreintes négatives en creux, et donc difficile d'accès.

Le moule mère et/ou le moule fille peut/peuvent être (chacun) en deux ou trois parties ou en autant de parties que nécessaire pour obtenir une finesse des dessins et/ou des formes des empreintes satisfaisante.

Dans un autre mode de réalisation, la structure de moule est directement usiné ou imprimé en 3D. La structure de moule dans le présent texte peut être configurée pour ne fabriquer que la structure de semelle ou pour fabriquer la structure de semelle et la tige d'un article chaussant, en particulier tel que décrit ci-après. La structure de moule peut ainsi comprendre, outre l'empreinte de semelle, une empreinte de tige comprenant une ou des empreinte(s) négative(s) et/ou positive(s).

La structure de moule, en particulier pour la fabrication d'un article chaussant, peut être en deux ou en trois parties, par exemple comprendre une partie supérieure recevant au moins en partie la tige et une partie inférieure recevant au moins en partie la tige et la structure de semelle, ladite partie inférieure comprenant des parties inférieures latérale et médiale.

De préférence, la structure de semelle comprend des faces interne et externe sensiblement opposées.

De préférence, l'élément de semelle textile comprend des faces interne et externe sensiblement opposées.

La face externe dudit au moins un élément de semelle textile et/ou de la structure de semelle est/sont de préférence orientée(s) vers le sol, et peut/peuvent venir en contact directement avec le sol lorsque l'élément de semelle textile thermo-comprimé et/ou la structure de semelle est/sont une partie d'une semelle d'usure ou une semelle d'usure. La face interne dudit au moins un élément de semelle textile et/ou de la structure de semelle est/sont de préférence orientée(s) en regard du dessous du pied de l'utilisateur.

La structure de semelle et/ou l'élément de semelle textile peut/peuvent comprendre (chacun) une portion de talon et/ou une portion d'avant-pied et/ou une portion de milieu de pied, en particulier s'étendant entre un bord médial et un bord latéral de l'article chaussant comprenant ladite structure de semelle ou ledit élément de semelle textile.

Ladite structure de semelle et/ou l'élément de semelle textile peut/peuvent s'étendre entre un bord arrière et un bord avant d'une part, et/ou entre un bord latéral et un bord médial d'autre part, d'un article chaussant comprenant ladite structure de semelle ou ledit élément de semelle textile.

De préférence, la vessie gonflée exerce une pression, directement ou indirectement, sur la face interne de l'élément de semelle textile, et pousse l'élément de semelle textile en sorte que sa face externe vienne en contact, directement ou indirectement, contre l'empreinte de semelle de la structure de moule. De préférence, l'élément de semelle textile est thermo-comprimé entre l'empreinte de semelle de la structure de moule et la vessie à l'état gonflée.

De préférence, la face interne de l'élément de semelle textile thermo-comprimé est sensiblement plane. En effet, la vessie gonflable a de préférence une surface sensiblement lisse de sorte que cette surface venant en contact directement ou indirectement avec la face interne de l'élément de semelle textile aplanie cette dernière. La pression imposée par la poussée de la vessie gonflable contribue à cet aplanissement.

De préférence, après l'étape de thermo-compression iii), le procédé comprend une étape de refroidissement de la structure de moule comprenant ledit au moins un élément de semelle textile thermo-comprimé. Cette étape permet de figer l'élément de semelle textile dans son état thermo-comprimé.

La structure de semelle peut comprendre ou être constituée d'un ou plusieurs élément(s) de semelle textile(s), notamment thermo-comprimé(s), en particulier un ou plusieurs élément(s) de semelle textile(s) forme(nt) un ou plusieurs élément(s) de semelle d'usure et/ou de semelle intermédiaire et/ou de semelle de propreté.

De préférence, la structure de semelle est une structure de semelle d'usure ou une structure de semelle intermédiaire ou une combinaison de ces dernières.

L'élément de semelle textile peut être un ou plusieurs tricot(s), un ou plusieurs tissu(s), un ou plusieurs nontissé(s), une ou plusieurs tresse(s), un ou plusieurs réseau(x) de fil(s)/fibre(s), ou une combinaison de ces derniers.

Le réseau de fil(s)/fibre(s) peut être obtenu par fabrication additive par exemple.

De préférence, la structure de semelle comprend au moins un élément de semelle textile tricoté.

De préférence, la structure de semelle comprend, ou est constituée, d'au moins un ou plusieurs élément(s) de semelle textile(s), notamment thermo-comprimé(s) à l'étape iii), associé(s) avec un ou plusieurs élément(s) de semelle auxiliaire(s), , éventuellement thermo-comprimé(s) lors de l'étape iii). Le ou les élément(s) de semelle auxiliaire(s) peut/peuvent être configuré(s) en sorte d'apporter une ou des fonction(s) particulière(s) d'amorti, de relance, ou de rigidification. Le ou les élément(s) de semelle auxiliaire(s) peut/peuvent être un textile (tricot(s), et/ou tissu(s), et/ou nontissé(s), et/ou une ou plusieurs tresse(s), et/ou réseau(x) de fil(s)/fibre(s)) ou un élément en mousse ou un film polymérique ou un élément d'amorti, par exemple en forme de donut. Le ou les élément(s) de semelle auxiliaire(s) peut/peuvent être thermo-comprimé(s) avec le ou les élément(s) de semelle textile(s) à l'étape iii) ou être rapporté(s) sur ledit au moins un élément de semelle textile thermo-comprimé après l'étape iii), par exemple par collage.

De préférence, l'élément de semelle textile est un ou plusieurs tricot(s), en particulier superposé(s) au moins en partie ou totalement. Le ou les tricot(s) peut/peuvent être à mailles cueillies ou à mailles jetées. Le ou les tricot(s) peut/peuvent être en trois dimensions, c'est-à-dire comprenant des couches supérieure et inférieure tricotées et reliées entre-elles par au moins un fil tricoté.

L'élément de semelle textile peut être tricoté sur un métier à tricoter rectiligne ou un métier à tricoter circulaire, notamment sur un métier à tricoter chaine ou un métier à tricoter rachel. L'élément de semelle textile, éventuellement et/ou l'élément de semelle auxiliaire, comprend/comprennent un ou plusieurs fil(s) au moins en partie thermofusible(s), éventuellement avec au moins un ou plusieurs fil(s) au moins en partie non thermofusible(s) ou non thermofusible(s).

De préférence, l'élément de semelle textile, en particulier un ou plusieurs tricot(s), est de construction textile unitaire.

### File(s) selon l'invention

Le ou les fil(s), thermofusible(s) au moins en partie, ou non thermofusible(s) au moins en partie, est/sont un ou des fil(s) monofilamentaire(s), et/ou un des fil(s) multifilamentaire(s) et/ou un ou des fil(s) filé(s) de fibres, et/ou un des élément(s) allongé(s) (par exemple un ruban ou une tresse), ou une combinaison de ces derniers.

Le ou les fil(s) peut/peuvent être de couleurs différentes ou non, transparent(s) ou opaque(s).

Le ou les fil(s) monofilamentaire(s) a/ont de préférence un diamètre supérieur ou égal à 0,01 mm et inférieur ou égal à 5 mm, encore de préférence un diamètre supérieur ou égal à 0,1 mm et inférieur ou égal à 2 mm.

Le ou les fil(s) multifilamentaire(s) et/ou fil(s) filés de fibres et/ou fil(s) monofilamentaire(s) a/ont de préférence un titre supérieur ou égal à 10 dtex et inférieur ou égal à 1000 dtex, encore de préférence supérieur ou égal à 30 dtex et inférieur ou égal à 500 dtex.

Le ou les fil(s) au moins en partie thermofusible(s), en particulier le ou les fil(s) monofilamentaire(s) monocomposant(s), a/ont un titre compris entre 300 dtex et 900 dtex (bornes incluses), plus particulièrement compris entre 400 dtex et 800 dtex (bornes incluses), notamment de l'ordre de 600 dtex.

Le ou les fil(s) multifilamentaires peut/peuvent être un ou des fil(s) texturé(s) FDY (Full Drawn Yarn), DTY (Draw Textured Yarn) ou encore POY (Partially Oriented Yarn), ou un mélange de ces derniers.

Un fil, au moins en partie thermofusible(s), peut être un fil comprenant au moins deux composants A et B, notamment du type bi-composants, un premier composant A thermofusible, en particulier ayant une température de fusion inférieure ou égale à la température de chauffage Tc lors de l'étape iii), et un second composant B, non thermofusible, en particulier ayant une température de fusion ou de dégradation supérieure à la température de chauffage Tc lors de l'étape iii).

Un fil thermofusible peut être un fil mono composant dont la température de fusion est inférieure ou égale à la température de chauffage Tc lors de l'étape iii).

De préférence, ledit au moins un élément de semelle textile comprend/est constitué d'un ou plusieurs fil(s) au moins en partie thermofusible(s), et/ou un plusieurs fil(s) au moins en partie non thermofusible(s), notamment non thermofusible(s).

Le ou les fil(s) au moins en partie thermofusible(s) selon l'invention peut/peuvent comprendre un premier composant A, en particulier thermofusible, choisi parmi les élastomères thermoplastiques; les polyuréthanes, notamment les polyuréthanes thermoplastiques, notamment leurs élastomères ; les polyamides, tels que le polyamide 6 ou 66; les polyoléfines, tels que le polypropylène (PP) ou le polyéthylène (PE); de préférence parmi les polyuréthanes. Le ou les fil(s) au moins en partie thermofusible(s) ou au moins en partie non thermofusible(s) ou non thermofusible(s) selon l'invention peut/peuvent comprendre un composant B, en particulier non thermofusible au sens du présent texte, choisi parmi les polyoléfines, tels que le polyéthylène haute densité, les polyamides, tels que le polyamide 4-6, les polyesters, tel que le polyéthylène téréphtalate.

Le ou les fil(s) multi filamentaire(s) et/ou le(s) fil(s) mono filamentaire(s) et/ou le(s) fil(s) filé(s), en particulier non thermofusible(s) ou au moins en partie thermofusible(s) ou dont la température de fusion globale ou de dégradation globale est supérieure à la température de chauffage Tc à l'étape iii), comprend/comprennent un ou plusieurs matériau(x) choisi(s) parmi une première liste de composés synthétiques : les polyesters, notamment le polyéthylène téréphtalate; les polyamides, tels que le PA 6, le PA 66, le PA 4-6, le PA 12; les polyoléfines, tels que le polypropylène, le polyéthylène, le PEEK, le PEUHMW (polyéthylène à très haut poids moléculaire); les aramides, notamment le méta-aramide ou le para-aramide, les élastomères, notamment de polyesters ou de polyuréthane; ou un mélange de ces derniers; les acétates de vinyle; les polyacryliques, tel que le polyacrylonitrile ; les élastomères ; les élasthannes, ou un mélange de ces derniers; et/ou une seconde liste de composés, en particulier de composés naturels ou issus de matières naturelles régénérées : le coton, la viscose, le lin, le sisal, la laine, la jute, la soie, le chanvre, et/ou une troisième liste de composés inorganiques : le carbone, des fibres minérales, telle que la fibre de roche, le verre, de préférence le carbone.

Le ou le(s) fil(s) selon l'invention peut/peuvent être également élastique(s). L'élément de semelle textile peut comprendre un ou plusieurs fil(s) élastique(s).

De préférence, la vessie gonflable est dans un matériau polymère apte à gonfler, et éventuellement se déformer, sous l'effet d'une pression de gonflage.

De préférence, la température de chauffage (Tc) à l'étape iii) est supérieure ou égale à 80°C et inférieure ou égale à 180°C, en particulier entre 100°C et 160°C.

La température de chauffage à l'étape iii) et la pression appliquée sont déterminées en fonction de l'empreinte de semelle du moule et de l'épaisseur du ou des élément(s) de semelle textile(s) et éventuellement du ou des éléments de semelle auxiliaire(s).

### Définitions

On comprend dans le présent texte par empreinte de semelle, l'ensemble de la ou des empreinte(s) négative(s) et/ou positive(s) disposée(s) sur la face externe de l'élément de semelle textile thermo-comprimé ou disposée(s) sur une surface interne de la structure de moule.

On comprend dans le présent texte par empreinte positive, tout élément se projetant à l'extérieur (notamment vers le sol en utilisation) de la face externe de l'élément de semelle textile thermo-comprimé (notamment correspondant sensiblement à une empreinte négative sur une surface interne de la structure de moule). Il s'agit par exemple d'une protrusion, telle un crampon ou une talonnette.

On comprend dans le présent texte par empreinte négative, tout élément en retrait (notamment se projetant vers le dessous du pied en utilisation) de la face externe de l'élément de semelle thermo-comprimé (notamment correspondant sensiblement à une empreinte positive sur une surface interne de la structure de moule). Il s'agit par exemple d'un évidement dans la face externe, telle une rainure.

On comprend par au moins en partie thermofusible dans le présent texte, tout fil, en particulier tout matériau polymère, choisi en sorte de fondre au moins en partie, éventuellement sensiblement totalement, lors de l'étape iii) de thermo-compression au-cours de laquelle il est chauffé, et/ou éventuellement dans une étape indépendante de thermocollage et/ou de thermoformage. Le terme au moins en partie thermofondu(s) est utilisé lorsque le ou les fil(s) au moins en partie thermofusible(s) a/ont été fondu(s) au moins en partie.

On comprend dans le présent texte par de construction textile unitaire, tout élément (pièce, chausson, support, couche,...) en une pièce textile d'un seul tenant. La pièce unitaire peut comprendre des coutures ou d'autres zones de solidarisation mais elles servent à sa mise en forme et/ou à la finition de ses bords (et non à l'ajout d'empiècement(s)).

On comprend dans le présent texte par « au moins en partie » d'un élément, sensiblement l'intégralité ou une partie de cet élément.

Dans une première variante, l'élément de semelle textile comprend un support de semelle textile ayant une face externe, et une ou plusieurs région(s) fonctionnelle(s) textile(s) disposée(s), en particulier de manière espacée et localisée, sur la face externe du support de semelle textile.

Le support de semelle textile peut comprendre au moins un tricot tel que défini dans le présent texte comprenant un ou plusieurs fil(s) au moins en partie thermofusible(s) et/ou un ou plusieurs fil(s) non thermofusible(s).

En particulier, la ou les région(s) fonctionnelle(s) textile(s) sont disposée(s) en retrait et/ou se projetant de la face externe du support de semelle textile.

La ou les région(s) fonctionnelle(s) peut/peuvent être formée(s) lors du tricotage du support de semelle textile ou encore par déformation du support de semelle textile, ou encore être indépendante(s) du support de semelle textile. Dans ce dernier cas, la ou les région(s) fonctionnelle(s) est/sont disposée(s) dans la structure de moule entre la face externe du support de semelle textile et l'empreinte de semelle du moule, en particulier en regard de la ou des empreinte(s) négative(s) et/ou positive(s) du moule (c'est-à-dire destinée(s) à former une ou des empreinte(s) positive(s) et/ou négatives respectivement sur la face externe de la structure de semelle et/ou sur la face externe dudit au moins un élément de semelle textile). De préférence, le support de semelle, et la ou les dite(s) région(s) textile(s) fonctionnelle(s) sont de construction textile unitaire, notamment tricotée.

Dans une sous-variante, la ou les région(s) fonctionnelle(s) textile(s) est/sont une ou des poche(s) textile(s).

De préférence, la ou les poche(s) textile(s) sont formées lors de la fabrication, notamment lors du tricotage, du support de semelle textile.

Dans une deuxième variante, l'élément de semelle textile comprend un support de semelle textile ayant une face externe, et une couche textile, continue ou discontinue, comprenant un ou des fil(s) au moins en partie thermofusible(s), disposée selon la face externe du support de semelle textile.

La couche textile, continue ou discontinue, peut être indépendante du support de semelle ou être de construction textile unitaire avec le support de semelle textile, notamment de construction tricotée unitaire avec le support de semelle textile.

Le support de semelle textile et ladite couche textile peuvent être ou comprendre un tricot ou plusieurs tricots sensiblement superposés, notamment deux tricots sensiblement superposées. Le support de semelle textile et/ou la couche textile, continue ou discontinue, et/ou la ou les région(s) textile(s) fonctionnelle(s) dans le présent texte comprend/comprennent un ou des fil(s) tel que défini(s) dans le présent texte.

Dans une sous-variante, la couche textile, continue ou discontinue, comprend une section ayant une épaisseur eᵢ à l'étape i) et une épaisseur e_{f} à l'étape iv), eᵢ étant différent d'e_{f}.

L'épaisseur eᵢ est supérieure, ou inférieure, à l'épaisseur e_{f} dans ladite section. De préférence, l'épaisseur eᵢ est supérieure d'au moins 20% à l'épaisseur e_{f} (eᵢ≤1,20 * e_{f}).

Lors de l'étape iii), la matière fondue issue de la fusion du ou des fil(s) au moins en partie thermofusible(s) flue et remplit l'empreinte de semelle du moule. L'épaisseur e_{f} est donc de préférence réduite après l'étape iii) de thermo-compression.

Dans une troisième variante, le rapport de la masse de la matière thermofondue issue du ou des fil(s) au moins en partie thermofusible(s) dans ledit au moins un élément de semelle textile sur la masse totale dudit au moins un élément de semelle textile est supérieur ou égal à 50%, de préférence supérieur ou égal à 80%.

Dans une variante, le rapport de la masse de la matière thermofondue issue du ou des fil(s) au moins en partie thermofusible(s) dans le support de semelle textile sur la masse totale du support de semelle textile est supérieur ou égal à 30%, de préférence supérieur ou égal à 50%, encore de préférence supérieur ou égal à 60%, préférentiellement supérieur ou égal à 70%, notamment supérieur ou égal à 80%, par exemple de l'ordre de 90%.

Dans une variante, le rapport de la masse de la matière thermofondue issue du ou des fil(s) au moins en partie thermofusible(s) dans la ou les région(s) textile(s) fonctionnelle(s) sur la masse totale de la ou des région(s) textile(s) fonctionnelle(s) est supérieur ou égal à 30%, de préférence supérieur ou égal à 50%, encore de préférence supérieur ou égal à 60%, préférentiellement supérieur ou égal à 70%, notamment supérieur ou égal à 80%, par exemple de l'ordre de 90%.

Dans une variante, le rapport de la masse de la matière thermofondue issue du ou des fil(s) au moins en partie thermofusible(s) dans la couche textile, continue ou discontinue, sur la masse totale de la couche textile, continue ou discontinue, est supérieur ou égal à 30%, de préférence supérieur ou égal à 50%, encore de préférence supérieur ou égale à 60%, préférentiellement supérieur ou égal à 70%, notamment supérieur ou égal à 80%, par exemple de l'ordre de 90%. Dans une quatrième variante, l'élément de semelle textile est de construction textile unitaire. Dans une cinquième variante, la structure de semelle est une semelle d'usure, en particulier la semelle d'usure comprend un ou plusieurs crampons textiles intégralement ou en partie thermofondu(s).

Dans une sixième variante, ledit au moins un élément de semelle textile est une enveloppe textile comprenant une portion de semelle textile et une portion périphérique d'enveloppement partiel du pied, notamment textile.

De préférence, la portion périphérique d'enveloppement partiel du pied (notamment comprenant un ou des fil(s) au moins en partie thermofusible(s)) s'étend sensiblement à la verticale de la portion de semelle.

Dans un mode de réalisation, la portion périphérique d'enveloppement partiel du pied comprend une portion avant et/ou une portion arrière et/ou une portion latérale et/ou une portion médiale, la ou les dites portion(s) se projetant sensiblement à la verticale de la face interne de l'élément de semelle textile ou de la face interne de la portion de semelle textile. De préférence, la portion arrière textile au moins en partie thermofondue (après l'étape iii)) forme un contrefort. De préférence, la portion avant textile au moins en partie thermofondue (après l'étape iii)) forme un bout dur.

Dans une autre variante, ledit au moins un élément de semelle textile comprend une portion de semelle textile (notamment comprenant un ou des fil(s) au moins en partie thermofusible(s)) ayant des bords latéral et médial, ledit élément de semelle textile comprend en outre une ou plusieurs branches textile(s) (notamment comprenant un ou des fil(s) au moins en partie thermofusible(s)) se projetant sensiblement à la verticale de la portion de semelle textile, en particulier une ou des branche(s) latérale(s) textile(s) se projetant du bord latéral de la portion de semelle et/ou une ou des branche(s) médiale(s) se projetant du bord médial de la portion de semelle. De préférence, la ou les branche(s) textile(s) comprend/comprennent chacune une ou des première(s) extrémité(s) en liaison avec le bord latéral ou médial de la portion de semelle textile et une ou des secondes(s) extrémité(s), notamment libre(s). La ou les seconde(s) extrémité(s) comprend/comprennent chacune une ouverture traversante, notamment un œillet, par exemple pour le passage d'un élément longiligne, par exemple un lacet. Les variantes de réalisation, définitions et modes de réalisation en référence au premier aspect peuvent être combinés indépendamment les uns avec les autres.

La présente divulgation a pour objet, selon un deuxième aspect, non compris dans les revendications annexées, un article chaussant comprenant une structure de semelle susceptible d'être obtenue par le procédé selon l'une quelconque des variantes de réalisation en référence au premier aspect de l'invention.

L'article chaussant comprend de préférence une tige en liaison avec la structure de semelle, encore de préférence la tige comprend au moins un chausson textile, notamment de construction textile unitaire. Le chausson textile de la tige peut comprendre un ou plusieurs fil(s) tel(s) que défini(s) dans le présent texte, notamment au moins en partie thermofondu(s). De préférence, le chausson textile est thermo-comprimé.

La présente invention a pour objet, selon un troisième aspect, un procédé de fabrication d'un article chaussant, comprenant la mise en œuvre du procédé de fabrication d'une structure de semelle selon l'une quelconque des variantes de réalisation en référence au premier aspect de l'invention, et comprenant la fourniture d'un chausson principal textile comprenant un ou plusieurs fil(s) au moins en partie thermofusible(s). Le chausson principal textile subit une étape de thermoformage, en particulier une étape de thermo-compression, notamment ayant lieu lors de l'étape iii) ou indépendamment de l'étape iii), par exemple avant ou après l'étape iii). Le thermoformage comprend une étape de chauffage du chausson principal et/ou du chausson auxiliaire, en particulier disposé(s) sur une préforme (souple ou rigide) en forme de pied, permettant la fusion du ou des fils au moins en partie thermofusible(s) afin de figer la forme de la tige comprenant ledit chausson principal et éventuellement ledit chausson auxiliaire au moins en partie thermofondu(s). La forme de la tige peut ainsi être figée sans recourir à l'application également d'une pression.

Dans un mode de réalisation, lorsque la thermo-compression du chausson principal textile a lieu lors de l'étape iii), l'élément de semelle textile et le chausson principal textile sont thermo-comprimés ensemble, et donc également thermoformés, en même temps. Cette disposition permet de solidariser le chausson principal textile avec l'élément de semelle textile lors de l'étape iii) lorsqu'ils sont indépendants.

Dans un mode de réalisation, lorsque la thermo-compression du chausson principal a lieu indépendamment de l'étape iii) :
- le chausson principal peut être thermo-comprimé indépendamment de l'élément de semelle textile, puis assemblé avec la structure de semelle, notamment par collage ou thermocollage, par couture ou toute technique équivalente ; ou
- le chausson principal peut être thermo-comprimé avec la structure de semelle comprenant ledit au moins un élément de semelle thermo-comprimé (ce qui permet également la solidarisation de la structure de semelle avec le chausson principal).

De préférence, l'article chaussant dans le présent texte comprend un axe longitudinal L s'étendant sensiblement entre l'arrière de l'article et l'avant de ce dernier. L'article chaussant comprend également un axe transversal T, notamment sensiblement perpendiculaire, à l'axe longitudinal, L et s'étendant entre le bord médial et le bord latéral dudit article chaussant.

### Chausson textile principal, Chausson textile auxiliaire (décrit ci-après)

De préférence, le chausson textile principal, et/ou le chausson textile auxiliaire, est/sont chacun une enveloppe textile, notamment tricotée, comprenant une portion de semelle (recouvrant en tout ou partie le dessous du pied du porteur de l'article chaussant) ; une portion latérale (recouvrant en tout ou partie le côté latéral du pied du porteur de l'article chaussant) ; une portion médiale (recouvrant en tout ou partie le côté médial du pied du porteur de l'article chaussant) ; une portion avant, notamment dans le prolongement des portions latérale, médiale et de semelle (recouvrant en tout ou partie l'avant du pied du porteur) ; et une portion arrière, notamment dans le prolongement des parties médiale, latérale, et de semelle (destinée à recouvrir en tout ou partie l'arrière du pied du porteur).

Le chausson principal et/ou le chausson auxiliaire comprend/comprennent chacun un volume intérieur, notamment correspondant, au moins en tout ou partie, au volume de réception ou d'accueil du pied de l'article chaussant.

De préférence, le chausson principal textile est de construction textile unitaire, en particulier tricoté ou tissé, notamment tricoté.

Le chausson principal textile et/ou le chausson auxiliaire textile comprend un ou des fil(s) tel(s) que défini(s) dans le présent texte, notamment un ou des fil(s) au moins en partie thermofusible(s) et/ou un des fil(s) au moins en partie non thermofusible(s) ou non thermofusible(s).

L'élément de semelle textile peut être indépendant du chausson principal textile. Lors de l'étape iii), l'élément de semelle textile est disposé entre l'empreinte de semelle de la structure de moule d'une part, et le chausson principal textile d'autre part, notamment sa portion de semelle. Dans ce cas, l'élément de semelle textile peut venir en contact directement avec l'empreinte de semelle du moule.

Dans une première variante, ledit au moins un élément de semelle textile est de construction textile unitaire avec le chausson principal textile.

Dans un mode de réalisation, ledit au moins un élément de semelle textile comprend (ou est constitué de ladite) la portion de semelle du chausson principal. Dans ce cas, la face interne de la portion de semelle du chausson principal est la face interne de l'élément de semelle textile, notamment de sa portion de semelle, et la face externe de la portion de semelle du chausson principal est la face externe de l'élément de semelle textile, notamment de sa portion de semelle.

Dans une seconde variante, ledit au moins un élément de semelle textile est une enveloppe textile comprenant une portion de semelle et une portion périphérique d'enveloppement partiel du pied.

Dans un mode de réalisation, la portion périphérique d'enveloppement partiel du pied comprend une portion avant et/ou une portion arrière et/ou une portion latérale et/ou une portion médiale, la ou les dites portion(s) se projetant sensiblement à la verticale de la face externe de l'élément de semelle textile, notamment de la face externe de sa portion de semelle. De préférence, la portion arrière textile au moins en partie thermofondue (après l'étape iii)) forme un contrefort. De préférence, la portion avant textile au moins en partie thermofondue (après l'étape iii)) forme un bout dur.

Dans un mode de réalisation, ladite enveloppe textile, ou la structure de semelle comprenant l'enveloppe textile thermo-comprimée, est disposée dans la structure de moule entre l'empreinte de semelle de la structure de moule et le chausson principal textile, en particulier la partie de semelle du chausson principal textile. Dans ce cas, l'élément de semelle textile ne vient pas en contact directement avec l'empreinte de semelle du moule.

Dans une variante, ledit au moins un élément de semelle textile thermo-comprimé comprend une portion de semelle textile (notamment au moins en partie thermofondue, et éventuellement thermo-comprimée) ayant des bords latéral et médial, ledit élément de semelle textile comprend en outre une ou plusieurs branches textile(s) (notamment au moins en partie thermofondue(s) et éventuellement thermo-comprimée(s)) se projetant sensiblement à la verticale de la portion de semelle textile, en particulier une ou des branche(s) latérale(s) textile(s) se projetant du bord latéral de la portion de semelle et/ou une ou des branche(s) médiale(s) se projetant du bord médial de la portion de semelle. De préférence, la ou les branche(s) comprend/comprennent chacune une ou des première(s) extrémité(s) en liaison avec le bord latéral ou médial de la portion de semelle textile et une ou des secondes(s) extrémité(s), notamment libre(s). La ou les seconde(s) extrémité(s) comprend/comprennent chacune une ouverture traversante, notamment un œillet, par exemple pour le passage d'un élément longiligne, par exemple un lacet.

Dans une troisième variante, le procédé comprend la fourniture d'un chausson auxiliaire textile comprenant un ou des fil(s) au moins en partie thermofusible(s) ayant un volume d'accueil du pied recevant, au moins en partie, le chausson principal textile.

Dans un mode de réalisation, le chausson auxiliaire textile subit une étape de thermoformage, notamment de thermo-compression, notamment ayant lieu lors de l'étape iii) ou indépendamment de l'étape iii), par exemple avant ou après l'étape iii). La fusion du ou des fils au moins en partie thermofusible(s) permet de former la tige.

Dans un mode de réalisation, lorsque la thermo-compression du chausson auxiliaire textile a lieu lors de l'étape iii), l'élément de semelle textile, le chausson principal textile et le chausson auxiliaire, sont thermo-comprimés ensemble, et notamment thermoformés en même temps. Cette disposition permet de solidariser l'élément de semelle textile, d'une part au chausson principal textile, et d'autre part au chausson auxiliaire, ainsi que les chaussons principal et auxiliaire ensemble.

Dans un mode de réalisation, lorsque la thermo-compression du chausson auxiliaire a lieu indépendamment de l'étape iii) :
- le chausson auxiliaire peut être thermo-comprimé indépendamment de l'élément de semelle textile, et indépendamment ou en même temps que le chausson principal, puis assemblé avec la structure de semelle, notamment par collage ou thermosoudage, par couture ou toute technique équivalente ; ou
- le chausson auxiliaire et le chausson principal peuvent être thermo-comprimés ensemble avec la structure de semelle comprenant l'élément de semelle thermo-comprimé (ce qui permet également la solidarisation de la structure de semelle avec le chausson principal et le chausson auxiliaire ainsi que la mise en forme de la tige).

De préférence, lorsque le chausson auxiliaire et le chausson principal sont thermoformés ensemble, notamment thermo-comprimés, ils sont superposés au moins en partie, ledit au moins un élément de semelle textile étant disposé entre le chausson auxiliaire et le chausson principal. Dans un mode de réalisation, le chausson auxiliaire est de construction textile unitaire, en particulier tricoté ou tissé, notamment tricoté. En particulier, le chausson auxiliaire et le chausson principal sont deux pièces textiles indépendantes.

Dans un mode de réalisation, le chausson auxiliaire textile et le chausson principal textile sont de construction textile unitaire, notamment tricotée, par exemple en une seule pièce textile, notamment tricotée. Ladite pièce textile peut avoir une forme générale sensiblement en L ou en U. De préférence, le chausson auxiliaire et le chausson principal sont en liaison textile, notamment tricotée, au niveau de leurs ouvertures d'introduction du pied dans leurs volumes intérieurs respectifs.

Dans une variante de réalisation, la portion de semelle du chausson textile principale et/ou la portion de semelle du chausson textile auxiliaire comprend/comprennent un ou des fil(s) au moins en partie thermofusible(s).

Dans une quatrième variante, la structure de semelle à l'étape iv) comprend une matière textile thermofondue du chausson principal textile, au moins en partie thermofondu, et/ou une matière textile thermofondue du chausson auxiliaire, au moins en partie thermofondu.

La présente invention a pour objet, selon un quatrième aspect et selon la revendication 14, une structure de semelle pour un article chaussant, susceptible d'être obtenue par le procédé de fabrication d'une structure de semelle selon l'une quelconque des variantes de réalisation en référence au premier aspect de l'invention, comprenant au moins un élément de semelle textile, au moins en partie thermofondu, ayant des faces interne et externe sensiblement opposées, la face externe de l'élément de semelle textile comprenant une empreinte de semelle, et ledit élément de semelle textile a une épaisseur variable. De plus, l'empreinte de semelle comprend au moins une empreinte négative ou positive, et la face interne de l'élément de semelle textile comprend au moins une région en regard de ladite empreinte négative ou positive qui est sensiblement plane et ne comprend pas d'évidement ou de creux.

Avantageusement, l'élément de semelle textile, au moins en partie thermofondu, notamment thermo-comprimé, n'est pas obtenu par embossage d'une couche textile et ne présente donc pas une épaisseur sensiblement constante correspondant à l'épaisseur de la couche textile.

En particulier, la face externe de l'élément de semelle textile comprend une empreinte de semelle textile au moins en partie, ou sensiblement totalement, thermofondue.

Avantageusement, une empreinte positive ou négative selon la face externe n'est pas formée par une déformation correspondante (négative ou positive respectivement) selon la face interne de l'élément de semelle textile. L'élément de semelle textile est donc plus résistant à l'abrasion et mécaniquement à la déformation (en flexion et/ou en extension).

Par exemple, l'élément de semelle textile, au moins en partie thermofondu, présente une épaisseur e₁ dans une section comprenant une empreinte positive se projetant de sa face externe qui est supérieure à une épaisseur e₂ dans une section comprenant une empreinte négative en retrait de sa face externe.

De préférence, l'épaisseur de base e₀ de l'élément de semelle textile correspond à l'épaisseur dans une section ne comprenant ni empreinte négative, ni empreinte positive selon la face externe de l'élément de semelle textile.

De préférence, le rapport du volume plein dudit au moins un élément de semelle textile, au moins en partie thermofondu, par rapport à son volume total est supérieur ou égal à 80%, de préférence supérieur ou égal à 90%.

Dans un mode de réalisation, l'élément de semelle textile au moins en partie thermofondu comprend une portion de semelle s'étendant sensiblement entre un bord arrière et un bord avant, et entre un bord latéral et un bord médial. De préférence, les bords arrière et avant correspondent sensiblement aux bords arrière et avant de l'article chaussant comprenant la structure de semelle. De préférence, les bords médial et latéral correspondent sensiblement aux bords latéral et médial de l'article chaussant comprenant la structure de semelle.

La face interne de l'élément de semelle peut avoir une forme globalement non plane, mais comprendre au moins une région disposée localement sensiblement en regard d'une empreinte négative ou positive sur la face interne qui est plane.

Par exemple lorsque l'élément de semelle forme une semelle d'usure comprenant des parties avant et arrière, la partie avant peut être légèrement surélevée par rapport à la partie arrière. En effet, la semelle d'usure peut remonter sur la tige au niveau de la pointe du pied de la tige.

Dans une seconde variante, l'épaisseur (e₁) de l'élément de semelle textile dans une section comprenant une empreinte positive est supérieure à l'épaisseur (e₂) de l'élément de semelle textile dans une section comprenant une empreinte négative.

Dans une troisième variante, le rapport de la masse de la matière textile thermofondue dans l'élément de semelle textile sur la masse totale de l'élément de semelle textile est supérieur ou égal à 50%, de préférence supérieur ou égal à 80%.

Dans une quatrième variante, l'élément de semelle textile est une semelle d'usure, optionnellement comprenant un ou plusieurs crampon(s) textile(s) au moins en partie thermofondu(s).

La présente invention a pour objet, selon un cinquième aspect et selon la revendication 18, un article chaussant comprenant une structure de semelle, selon l'une quelconque des variantes de réalisation en référence au quatrième aspect de l'invention.

Dans une première variante, l'article chaussant comprend un chausson principal textile au moins en partie thermofondu.

Dans une seconde variante de réalisation, l'élément de semelle textile est de construction textile unitaire avec le chausson principal textile.

Dans une troisième variante de réalisation, l'élément de semelle textile au moins en partie thermofondu est une enveloppe textile comprenant une portion de semelle et une portion périphérique d'enveloppement partiel du pied.

Dans un mode de réalisation, l'élément de semelle textile au moins en partie thermofondu comprend une ou plusieurs branche(s) se projetant sensiblement à la verticale d'un bord latéral et/ou d'un bord médial de la portion de semelle de l'élément de semelle textile. De préférence, la ou les branche(s) est/sont une ou des branche(s) textile(s), notamment latérale(s) et/ou médiale(s), comprenant un ou des fil(s) tel(s) que défini(s) selon le présent texte, en particulier un ou des fil(s) au moins en partie thermofusible(s) de sorte qu'elle(s) est/sont au moins en partie thermofondue(s).

De préférence, la ou les branche(s) comprend/comprennent une première extrémité en liaison avec le bord latéral ou médial, et une seconde extrémité éventuellement libre.

La ou les seconde(s) extrémité(s) de la ou des branche(s) latérale(s) converge(nt) vers la ou les seconde(s) extrémité(s) de la ou des branche(s) médiale(s).

La ou les seconde(s) extrémité(s) peut/peuvent comprendre une ouverture traversante, tel un œillet de passage, pour le passage d'un élément longiligne, par exemple un lacet.

Dans une quatrième variante de réalisation, l'article chaussant comprend un chausson auxiliaire textile au moins en partie thermofondu et ayant un volume d'accueil du pied recevant, au moins en partie, le chausson principal textile.

Dans une variante de réalisation, ledit élément de semelle textile comprend une matière textile thermofondue du chausson principal, et/ou une matière textile thermofondue du chausson auxiliaire.

Dans une variante de réalisation, l'article chaussant comprend au moins une fenêtre de visualisation textile au moins en partie thermofondue, notamment comprenant un ou des fil(s) transparent(s) ou opaque(s) au moins en partie thermofusible(s).

Le chausson principal ou le chausson auxiliaire ou l'élément de semelle textile selon l'invention peut/peuvent comprendre une ou plusieurs fenêtre(s) de visualisation textile au moins en partie thermofondue.

Par exemple, le chausson auxiliaire comprend une fenêtre de visualisation textile au moins en partie thermofondue disposée sensiblement en regard d'une portion du chausson principal. Le chausson principal est donc visible de l'extérieur de l'article chaussant à travers ladite fenêtre. Les variantes de réalisation, définitions, modes de réalisation, en référence au premier et/ou au second et/ou au troisième et/ou au quatrième et/ou au cinquième aspect(s) de l'invention peuvent être combinés entre-eux, indépendamment les uns des autres, à moins qu'il en soit précisé autrement.

De préférence, dans le présent texte, l'expression thermofusible est utilisée pour un élément avant sa thermofusion (qui peut être obtenue lors d'une étape de thermoformage ou d'une étape de thermo-compression) en référence au procédé de fabrication d'une structure de semelle ou d'un article chaussant, et l'expression thermofondu(e) est utilisée pour ce même élément après sa thermofusion en référence à la structure de semelle ou à l'article chaussant obtenu.

De préférence, l'article chaussant et/ou la structure de semelle, selon l'invention, est /sont un article chaussant et/ou une structure de semelle pour la pratique du sport, par exemple (et à titre non limitatif) : football, basketball, randonnée, course à pied, cyclisme, .....

### Description des dessins

L'invention sera mieux comprise à la lecture de la description des modes de réalisation de l'invention donnés à titre d'exemples non limitatifs, en référence aux dessins annexés, sur lesquels :
[Fig.1] la figure **1** illustre de manière schématique, vue de côté, un premier exemple d'élément de semelle textile, avant thermo-compression, selon l'invention;
[Fig.2] la figure **2** illustre de manière schématique, vue de côté, un second exemple d'élément de semelle textile, avant thermo-compression, selon l'invention;
[Fig.3] la figure **3** représente de manière schématique, vue de côté, un premier exemple de structure de semelle comprenant le premier exemple ou le second exemple d'élément de semelle textile thermo-comprimé;
[Fig.4] la figure **4** représente de manière schématique, sensiblement en perspective et vue de dessus, le premier exemple de structure de semelle représenté à la figure 3;
[Fig.5] la figure **5** représente de manière schématique, vue de côté, des sections de la structure de semelle représentées aux figures 3 et 4;
[Fig.6] la figure **6** illustre de manière schématique, vue de côté, un premier exemple de chausson principal textile associé avec un troisième exemple d'élément de semelle textile, et un autre élément de semelle, avant thermo-compression;
[Fig.7] la figure **7** illustre de manière schématique, vue de dessus, un second exemple de structure de semelle comprenant le troisième exemple d'élément de semelle textile représenté à la figure 6 thermo-comprimé;
[Fig.8] la figure **8** illustre de manière schématique, vue de côté, le second exemple de structure de semelle représenté à la figure 7;
[Fig.9] la figure **9** illustre de manière schématique, vue de côté, un second exemple de chausson principal textile associé avec trois éléments de semelle textile selon un quatrième exemple, avant thermo-compression;
[Fig.10] la figure **10** illustre de manière schématique, vue de côté, un troisième exemple de chausson principal textile, un premier exemple de chausson auxiliaire textile, et deux éléments de semelle textile selon un cinquième exemple, avant thermo-compression;
[Fig.11] la figure **11** illustre de manière schématique, vue de côté, un quatrième exemple de chausson principal textile, un second exemple de chausson auxiliaire textile, et un sixième exemple d'élément de semelle textile de construction textile unitaire avec le chausson principal, avant thermo-compression;
[Fig.12] la figure **12** illustre de manière schématique, vue en perspective, un troisième exemple d'une structure de semelle comprenant un élément de semelle textile selon un septième exemple qui est thermo-comprimé;
[Fig.13] la figure **13** illustre de manière schématique, vue en perspective, un premier exemple d'une structure de moule selon l'invention;
[Fig.14] la figure **14** illustre de manière schématique, vue de dessus, un premier exemple d'empreinte de semelle de la structure de moule de la figure 13;
[Fig.15] la figure **15** illustre de manière schématique, vue de côté, le premier exemple d'empreinte de semelle de la structure de moule de la figure 13.

### Description des modes de réalisation

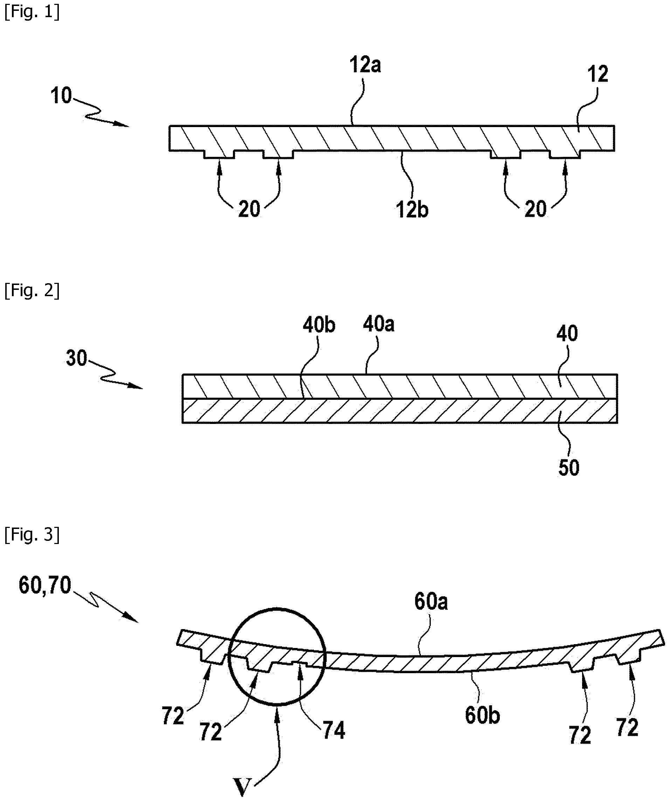

Le premier exemple d'élément de semelle textile 10 représenté à la figure 1 comprend un support de semelle textile 12 ayant des faces interne 12a et externe 12b sensiblement opposées, et des régions fonctionnelles textiles 20 se projetant de la face externe 12b. De préférence, les régions fonctionnelles textiles 20 et le support de semelle 10 sont de construction textile unitaire. Le support de semelle textile 12 et les régions fonctionnelles textiles 20 comprennent, chacun, un ou des fil(s) au moins en partie thermofusible(s).

Le second exemple d'élément de semelle textile 30 comprend un support de semelle textile 40 ayant des faces interne 40a et externe 40b sensiblement opposées, et une couche textile 50, dans cet exemple précis continue, disposée sur la face externe 40b. De préférence, le support de semelle textile 40 et la couche textile 50 sont de construction textile unitaire, et comprennent chacun un ou de fil(s) au moins en partie thermofusible(s). La couche textile 50 peut comprendre davantage de fils au moins en partie thermofusible(s) que le support de semelle 40. Lorsqu'ils sont de construction textile unitaire, il est possible de différencier dans l'épaisseur du textile la répartition des fils au moins en partie thermofusible(s).

Dans ces exemples, les éléments de semelle textile 10 et 30 sont chacun un tricot de construction tricotée unitaire. Il est possible cependant, que les éléments de semelle textile soient chacun combinés avec un ou plusieurs autres éléments de semelle auxiliaires, notamment textile(s) ou non, par exemple un ou des film(s) polymère(s) et/ou une ou plusieurs pièce(s) fonctionnelle(s) moulée(s), par exemple en mousse et/ou une ou plusieurs pièce(s) de renfort.

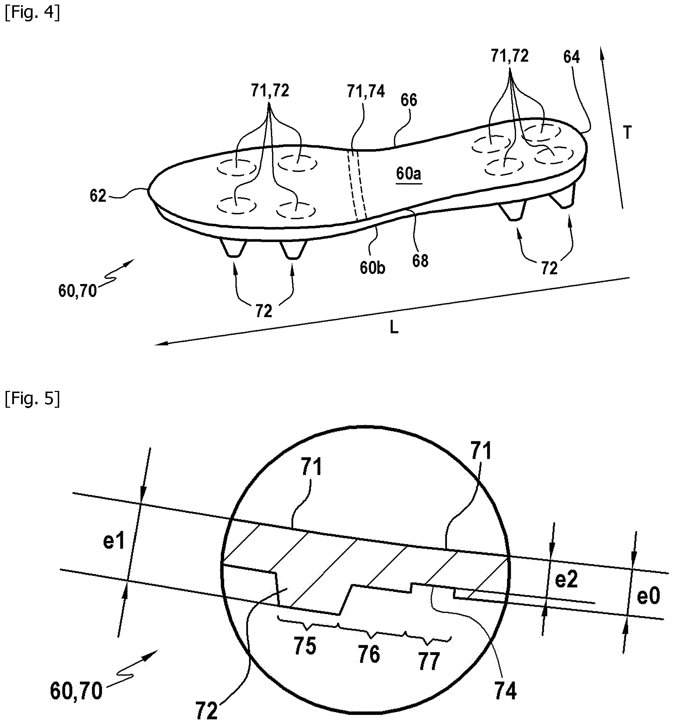

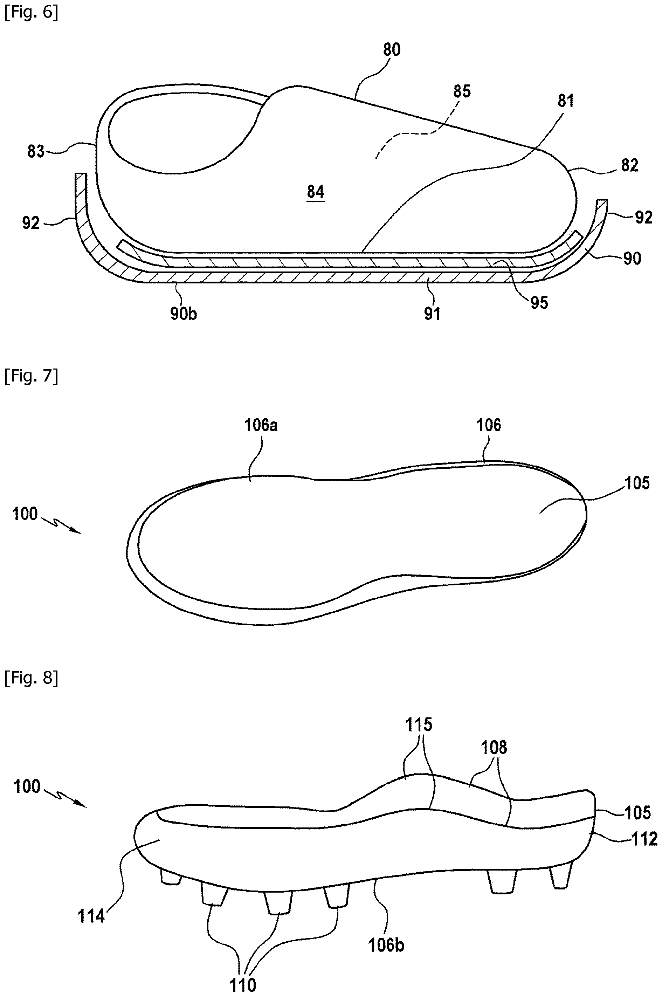

La structure de semelle 60 comprend l'élément de semelle textile 10 ou 30 thermo-comprimé selon une même empreinte de semelle d'une structure de moule donnée. La structure de semelle 60 est dans cet exemple précis, une semelle d'usure 70, et comprend des faces interne 60a et externe 60b sensiblement opposées. La structure de semelle 60 comprend huit empreintes positives 72, notamment des crampons et une empreinte négative 74, notamment une rainure transversale permettant d'assouplir la semelle d'usure 70. La structure de semelle 60 a un axe longitudinal L s'étendant sensiblement entre le bord avant 62 et le bord arrière 64, et un axe transversal T s'étendant sensiblement entre le bord médial 66 et le bord latéral 68. Les axes T et L sont sécants, et peuvent être sensiblement perpendiculaires. On remarque sur les figures que la structure de semelle 60 a un volume plein. Par ailleurs, les régions 71 de la face interne 60a de la structure de semelle 60 en regard sensiblement des empreintes positives 72 et de l'empreinte négative 74 sont sensiblement planes. Sur la figure 5, la section 75 de l'élément de semelle textile thermo-comprimé 70 comprend l'empreinte positive 72 et a une épaisseur e₁. La section 76 de l'élément de semelle textile thermo-comprimé 70, sans empreinte positive ou négative, a une épaisseur de base e₀. La section 77 de l'élément de semelle textile thermo-comprimé 70, comprenant l'empreinte négative 74, a une épaisseur e₂. L'épaisseur de l'élément de semelle thermo-comprimé 70 est donc variable, en particulier e₁ est supérieur à e₂. La figure 6 représente une variante d'un ensemble à thermo-comprimer pour former une tige et une structure de semelle d'un article chaussant. Ledit ensemble comprend un chausson principal textile 80 ayant un volume interne de réception d'un pied et comprenant un ou des fil(s) au moins en partie thermofusible(s). Le chausson principal 80 comprend une portion de semelle 81, une portion avant 82, une portion arrière 83, et des portions latérale 84 et médiale 85. Ledit ensemble comprend également un troisième exemple d'élément de semelle textile 90 se présentant sous la forme d'une enveloppe textile, et recevant en partie le chausson principal 80. L'élément de semelle textile 90 comprend une portion de semelle 91 et une portion périphérique d'enveloppement partiel du pied 92. La portion périphérique d'enveloppement partiel du pied 92 s'étend sensiblement à la verticale de la portion de semelle 91, au moins en partie selon les bords avant et arrière, et les bords latéral et médial de la portion de semelle 91.

Il est possible de disposer un autre élément de semelle auxiliaire qui est une pièce intercalaire 95 entre la portion de semelle 81 du chausson principal 80 et la partie de semelle 91 de l'élément de semelle textile 90, par exemple un film polymère pour apporter une fonction de renfort. L'ensemble destiné à être thermo-comprimé pour former la structure de semelle comprend ainsi l'élément de semelle textile 90, la pièce intercalaire 95 et éventuellement au moins en partie la portion de semelle 81 du chausson 80. L'ensemble destiné à former l'article chaussant, comprenant le chausson principal 80, l'élément de semelle textile 90 et la pièce intercalaire 95, subit une étape de thermo-compression au-cours de laquelle une vessie gonflable est disposée dans le volume interne du chausson principal 80, puis l'ensemble est disposé dans une structure de moule, la vessie gonflable est gonflée en sorte de pousser la face externe 90b de l'élément de semelle textile 90 contre l'empreinte de semelle de la structure de moule. Puis, l'ensemble est chauffé à une température de chauffage Tc afin de faire fondre le ou les matériau(x) thermofusible(s), notamment du ou des fil(s) au moins en partie thermofusible(s). La matière thermfondue comble l'empreinte de semelle et forme ainsi une empreinte de semelle textile au moins en partie thermofondue correspondante sur la face externe de l'élément de semelle textile 90 thermo-comprimé et au moins en partie thermofondu.

Les figures 7 et 8 représentent un second exemple de structure de semelle 100 qui est obtenu par la thermo-compression uniquement de l'élément de semelle textile 90 représenté à la figure 6. Cette structure de semelle 100 est de préférence une semelle d'usure. L'élément de semelle textile thermo-comprimé 105 comprend une portion de semelle 106 ayant des faces interne 106a et externe 106b sensiblement opposées ainsi qu'une portion d'enveloppement partiel du pied 108 s'étendant sensiblement à la verticale de la partie de semelle 106. Tel que cela est visible sur la figure 7, la face interne 106a de la portion de semelle 106 est sensiblement plane implicitement du fait de la surface sensiblement lisse de la vessie gonflable mise en œuvre. Par ailleurs, la structure de semelle 100 comprend des empreintes positives 110 se projetant de la face externe 106b. Avantageusement, la structure de semelle 100 comprend via la portion d'enveloppement 108 au moins en partie thermofondue un contrefort 112 et un bout dur avant 114 ainsi que des ailes de maintien latérales 115.

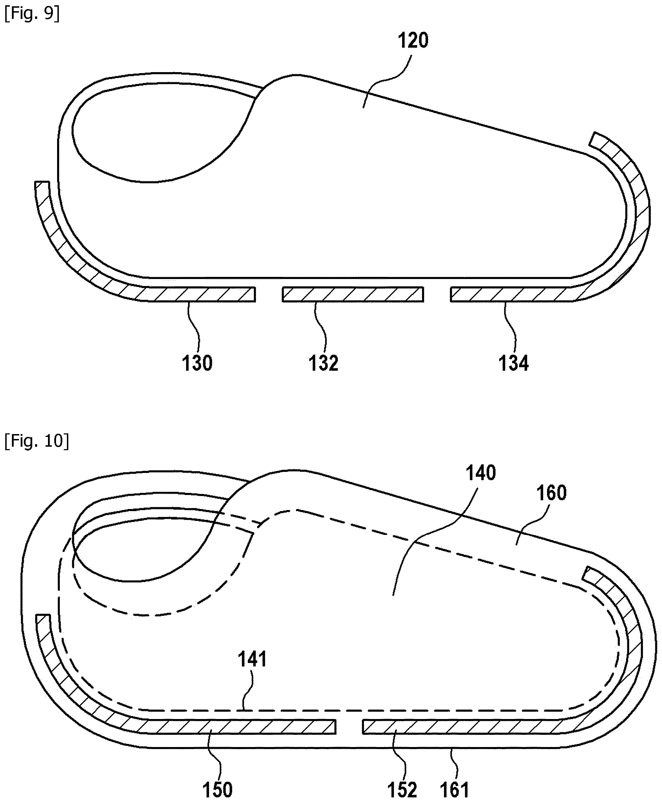

La figure 9 représente un ensemble destiné à former un article chaussant après au moins une étape de thermo-compression comprenant un second exemple de chausson principal textile 120 associé avec trois éléments de semelle textiles 130,132 et 134. Les trois éléments de semelle textile 130,132 et 134 sont indépendants et forment ensemble sensiblement une enveloppe textile similaire à l'enveloppe textile 90 de la figure 6. De préférence, le chausson principal 120, les éléments de semelle textiles 130,132 et 134 comprennent, notamment chacun, un ou des fil(s) au moins en partie thermofusible(s).

La figure 10 représente un ensemble destiné à former un article chaussant après au moins une étape de thermo-compression comprenant un troisième exemple de chausson principal textile 140 associé avec deux éléments de semelle textile 150 et 152 et un chausson auxiliaire textile 160. Les deux éléments de semelle textile 150 et 152 sont indépendants et forment ensemble sensiblement une enveloppe textile similaire à l'enveloppe textile 90 de la figure 6. De préférence, le chausson auxiliaire 160, le chausson principal 140 et les éléments de semelle textiles 150,152 comprennent, notamment chacun, un ou des fil(s) au moins en partie thermofusible(s). Les deux éléments de semelle 150,152 sont disposés dans le prolongement l'un de l'autre et au moins entre la portion de semelle 141 du chausson principal 140 et la portion de semelle 161 du chausson auxiliaire 160. Dans ce cas, la thermo-compression de l'ensemble destiné à former l'article chaussant, comprend les chaussons principal 140 et auxiliaire 160 thermofondus au moins en partie, notamment également thermo-comprimés. La structure de semelle comprend, au moins en partie, la portion de semelle 161 du chausson auxiliaire 160 au moins en partie thermofondue (notamment thermo-comprimée), les éléments de semelle textile 150,152 au moins en partie thermofondus (notamment thermo-comprimés), et éventuellement au moins en partie la portion de semelle 141 du chausson principal 140. La portion de semelle du chausson principal peut être construite, en particulier lors du tricotage, en sorte de présenter une épaisseur importante, par exemple comprendre des mailles bouclées, et être thermofusible partiellement afin qu'un matelas de fils non thermofondus subsistent pour apporter du confort.

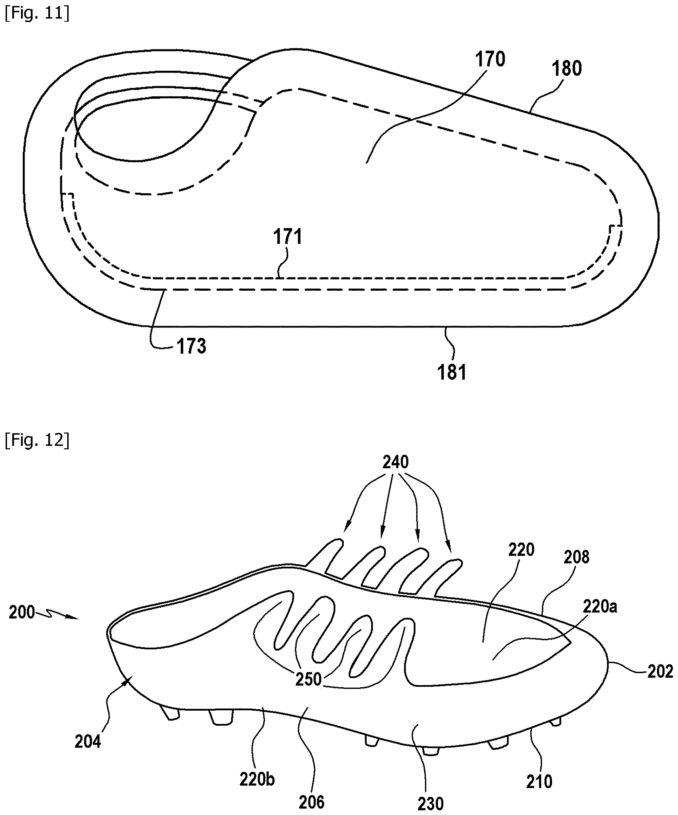

La figure 11 représente un ensemble destiné à former un article chaussant après au moins une étape de thermo-compression (iii) comprenant un chausson principal textile 170, un chausson auxiliaire textile 180 et un élément de semelle textile 173 de construction textile unitaire, notamment tricoté, avec la portion de semelle 171 du chausson principal 170. L'ensemble pourrait comprendre un autre élément de semelle textile de construction textile unitaire avec la portion de semelle du chausson auxiliaire. Dans cet exemple précis, la portion de semelle 171 a une construction textile configurée en sorte qu'elle comprenne au moins deux épaisseurs ou couches textiles. L'élément de semelle textile 173 pourrait de manière alternative être formé de la portion de semelle 181 du chausson auxiliaire 180. En pratique après thermo-compression de l'ensemble, la structure de semelle comprend la portion de semelle 181 au moins en partie thermofondue, et thermo-comprimée, l'élément de semelle textile 173 au moins en partie thermofondue, et thermo-comprimée, et la portion de semelle 171 au moins en partie thermofondue, et thermo-comprimée.

La figure 12 représente un troisième exemple de structure de semelle 200 seule comprenant au moins un élément de semelle textile au moins en partie thermofondu 210, et thermo-comprimé comprenant une portion de semelle 220 ayant des faces interne 220a et externe 220b sensiblement opposées, et un portion d'enveloppement périphérique partiel du pied textile 230, au moins en partie thermofondue, et thermo-comprimée, en particulier s'étendant sensiblement à la verticale de la portion de semelle 220 et selon les bords avant 202, arrière 204, médial 206 et latéral 208. Ladite structure de semelle 200 comprend en outre quatre branches latérales 240 et quatre médiales 250 se projetant respectivement selon la portion d'enveloppement périphérique 230 selon respectivement les bords latéral 208 et médial 206. Les branches 240,250 comprennent chacune des premières extrémités en liaison avec la portion d'enveloppement 230, et des secondes extrémités, notamment libres. Les secondes extrémités des branches latérales 240 convergent vers les secondes extrémités des branches médiales 250. Dans cet exemple précis, la portion d'enveloppement 230 forme en quelque sorte une coque délimitant un volume d'accueil partiel pour le pied et comprenant un bout dur et un contrefort arrière. La structure de de semelle 200 apporte ainsi du renfort à la tige d'un article chaussant par l'intermédiaire des branches 240,250. Les secondes extrémités libres peuvent comprendre également chacune une ouverture traversante, tel un œillet, par exemple pour le passage d'un élément longiligne (exemple un lacet). La structure de semelle 200 peut être obtenue au moyen de la superposition de plusieurs éléments de semelle textile, dont au moins une présente une forme similaire à celle de l'enveloppe textile 90 avec des branches latérales et médiales textiles. Lesdites branches peuvent être formées par tricotage ou encore par découpe dans au moins un élément de semelle textile. Lorsque l'article chaussant est fabriqué à l'aide d'au moins un chausson textile selon l'invention, il est possible que ces branches résultent de la disposition localement de fils thermofusibles sur les portions latérale et médiale du chausson (principal et/ou auxiliaire).

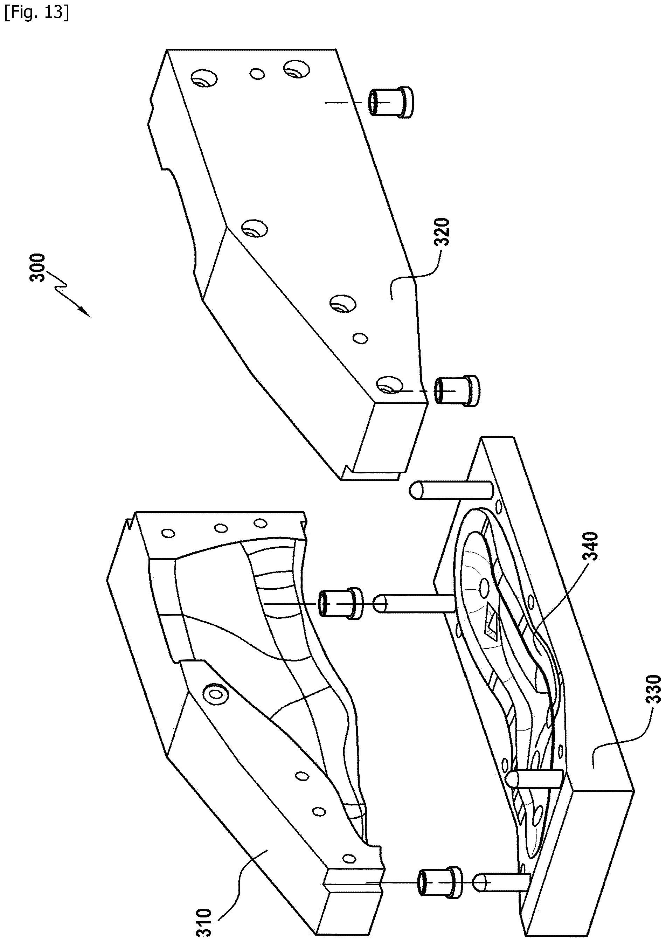

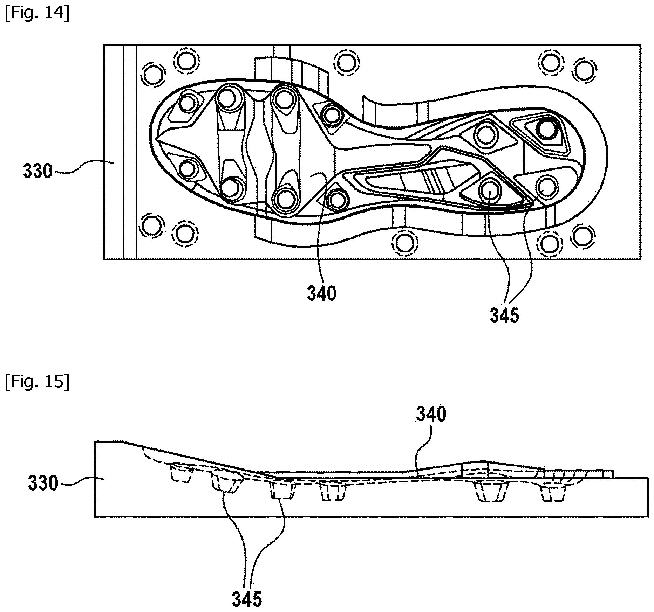

La figure 13 représente un premier exemple d'une structure de moule 300 comprenant des parties supérieures gauche 310 et droite 320, et une partie inférieure 330. La partie inférieure 330 comprend une empreinte de semelle 340, laquelle est vue de dessus à la figure 14 et vue de côté à la figure 15. L'empreinte de semelle 340 comprend dans cet exemple des empreintes négatives 345, lesquelles forment des empreintes positives sur la face externe d'au moins un élément de semelle textile thermo-comprimé.

De manière générale, le ou les fil(s) dans les modes de réalisation ci-dessus est/sont tel(s) que défini(s) dans le présent texte.

Le procédé selon l'invention permet avantageusement de fabriquer de manière simplifiée, notamment via une seule étape de mise en forme à chaud et sous pression, une structure de semelle ou un article chaussant comprenant une tige et une structure de semelle. Il est possible de fonctionnaliser localement sans limite la structure de semelle ou l'article chaussant de manière simplifiée selon la disposition et le type de fil(s) (fusible, couleur, matière,...) mis en œuvre. De plus, il est possible de fabriquer en une seule étape de mise en forme à chaud et sous pression, un article chaussant en entier ce qui simplifie énormément le procédé de fabrication, en réduit son coût et limite la génération de rebus et les erreurs de fabrication lorsque de nombreuses opérations sont nécessaires.

## Revendications

1. Procédé de fabrication d'une structure de semelle (60 ;100 ;200), **caractérisé en ce qu'**il comprend:
(i) fournir au moins un élément de semelle textile (10 ;30 ;90 ;130 ;132 ;134 ; 150 ;152 ;173) ayant une face externe, comprenant un ou des fils au moins en partie thermofusible(s);
(ii) disposer l'élément de semelle textile (10 ;30 ;90 ;130 ;132 ;134 ;150 ;152 ; 173) dans une structure de moule (300) comprenant une empreinte de semelle (340);
(iii) disposer une vessie gonflable dans la structure de moule (300), et gonfler la vessie gonflable pour plaquer, directement ou indirectement, la face externe de l'élément de semelle textile (10 ;30 ;90 ;130 ;132 ;134 ;150 ;152 ;173) contre l'empreinte de semelle (340), et chauffer l'élément de semelle textile (10 ;30 ;90 ;130 ;132 ;134 ;150 ;152 ;173) afin de fondre le ou les fil(s) au moins en partie thermofusible(s) et mouler sensiblement l'empreinte de semelle (340) sur la face externe de l'élément de semelle textile (10 ;30 ;90 ;130 ;132 ;134 ;150 ;152 ;173);
(iv) obtention d'une structure de semelle (60 ;100 ;200) comprenant au moins un élément de semelle textile thermo-comprimé (70 ;105 ;210).

2. Procédé de fabrication d'une structure de semelle (60 ;100 ;200) selon la revendication 1, **caractérisé en ce que** l'élément de semelle textile (10) comprend un support de semelle textile (12) ayant une face externe (12b), et une ou plusieurs région(s) fonctionnelle(s) textile(s) disposée(s) (20), en particulier de manière espacée et localisée, sur la face externe (12b) du support de semelle textile (12).

3. Procédé de fabrication d'une structure de semelle (60 ;100 ;200) selon la revendication 2, **caractérisé en ce que** la ou les région(s) fonctionnelle(s) textile(s) (20) est/sont une ou des poche(s) textile(s).

4. Procédé de fabrication d'une structure de semelle (60 ;100 ;200) selon la revendication 1, **caractérisé en ce que** l'élément de semelle textile (30) comprend un support de semelle textile (40) ayant une face externe (40b), et une couche textile (50), continue ou discontinue, comprenant un ou des fil(s) au moins en partie thermofusible(s), disposée selon la face externe (40b) du support de semelle textile (40).

5. Procédé de fabrication d'une structure de semelle (60 ;100 ;200) selon la revendication 4, **caractérisé en ce que** la couche textile (50), continue ou discontinue, comprend une section ayant une épaisseur eᵢ à l'étape i) et une épaisseur e_{f} à l'étape iv), eᵢ étant différent d'e_{f}.

6. Procédé de fabrication d'une structure de semelle (60 ;100 ;200) selon l'une quelconque des revendications 1 à 5, **caractérisé en ce que** le rapport de la masse de la matière thermofondue issue du ou des fil(s) au moins en partie thermofusible(s) dans ledit au moins un élément de semelle textile (10 ;30 ;90 ;130 ;132 ;134 ;150 ; 152 ;173) sur la masse totale dudit au moins un élément de semelle textile (10 ;30 ;90 ;130 ;132 ;134 ;150 ;152 ;173) est supérieur ou égal à 50%, de préférence supérieur ou égal à 80%.

7. Procédé de fabrication d'une structure de semelle selon l'une quelconque des revendications 1 à 6, **caractérisé en ce que** l'élément de semelle textile (10 ;30 ;90 ;130 ;132 ;134 ;150 ;152 ;173) est de construction textile unitaire.

8. Procédé de fabrication d'une structure de semelle (60;100 ;200) selon l'une quelconque des revendications 1 à 7, **caractérisé en ce que** la structure de semelle (60 ;100 ;200) est une semelle d'usure, en particulier la semelle d'usure comprend un ou plusieurs crampons textiles intégralement ou en partie thermofondu(s) (72 ;110).

9. Procédé de fabrication d'un article chaussant, **caractérisé en ce qu'**il comprend la mise en œuvre du procédé de fabrication d'une structure de semelle (60 ;100 ;200) selon l'une quelconque des revendications 1 à 8, et la fourniture d'un chausson principal textile (80 ;120 ;140 ;170) comprenant un ou plusieurs fil(s) au moins en partie thermofusible(s), et **en ce que** le chausson principal textile subit une étape de thermoformage, notamment ayant lieu lors de l'étape iii) ou indépendamment de l'étape iii).

10. Procédé de fabrication d'un article chaussant selon la revendication 9, **caractérisé en ce que** ledit au moins un élément de semelle textile (173) est de construction textile unitaire avec le chausson principal textile (170).

11. Procédé de fabrication d'un article chaussant selon la revendication 9, **caractérisé en ce que** ledit au moins un élément de semelle textile (90) est une enveloppe textile comprenant une portion de semelle (91) et une portion périphérique d'enveloppement partiel du pied.

12. Procédé de fabrication d'un article chaussant selon l'une quelconque des revendications 9 à 11, **caractérisé en ce qu'**il comprend un chausson auxiliaire textile (160 ;180) comprenant un ou des fil(s) au moins en partie thermofusible(s) ayant un volume d'accueil du pied recevant, au moins en partie, le chausson principal textile (140 ;170).

13. Procédé de fabrication d'un article chaussant selon l'une quelconque des revendications 9 à 12, **caractérisé en ce que** la structure de semelle à l'étape iv) comprend une matière textile thermofondue du chausson principal (80 ;120 ;140 ;170), au moins en partie thermofondu, et/ou une matière textile thermofondue du chausson auxiliaire (160 ;180), au moins en partie thermofondu.

14. Structure de semelle (60 ;100 ;200) pour un article chaussant, susceptible d'être obtenue par le procédé de fabrication d'une structure de semelle (60 ;100 ;200) selon l'une quelconque des revendications 1 à 8, comprenant au moins un élément de semelle textile (70 ;105 ;210), au moins en partie thermofondu, ayant des faces interne (60a ; 160a ; 220a) et externe (60b ; 160b ; 220b) sensiblement opposées, la face externe (60b ; 160b ; 220b) de l'élément de semelle textile (70 ;105 ;210) comprenant une empreinte de semelle, **caractérisée en ce que** ledit élément de semelle textile a une épaisseur variable, **en ce que** l'empreinte de semelle comprend au moins une empreinte négative (74) ou positive (72 ;110), et **en ce que** la face interne (60a ; 160a ; 220a) de l'élément de semelle textile (70 ;105 ;210) comprend au moins une région (71) en regard de ladite empreinte négative (74) ou positive (72 ;110) qui est sensiblement plane et ne comprend pas d'évidement ou de creux.

15. Structure de semelle (60 ;100 ;200) selon la revendication 14, **caractérisée en ce que** l'épaisseur (e₁) de l'élément de semelle textile (70 ;105 ;210) dans une section (75) comprenant une empreinte positive (72) est supérieure à l'épaisseur (e₂) de l'élément de semelle textile (70 ;105 ;210) dans une section (77) comprenant une empreinte négative (74).

16. Structure de semelle (60 ;105 ;200) selon l'une ou l'autre des revendications 14 et 15, **caractérisée en ce que** le rapport de la masse de la matière textile thermofondue dans l'élément de semelle textile (70 ;105 ;210) sur la masse totale de l'élément de semelle textile (70 ;105 ;210) est supérieur ou égal à 50%, de préférence supérieur ou égal à 80%.

17. Structure de semelle (60 ;105 ;200) selon l'une quelconque des revendications 14 à 16, **caractérisée en ce que** l'élément de semelle textile (70 ;105 ;200) est une semelle d'usure (70 ;105 ;200), optionnellement comprenant un ou plusieurs crampon(s) textile(s) (72 ;110) au moins en partie thermofondu(s).

18. Article chaussant comprenant une structure de semelle (60 ; 105 ;200) selon l'une quelconque des revendications 14 à 17.

19. Article chaussant selon la revendication 18, **caractérisé en ce qu'**il comprend un chausson principal textile (80 ;120 ;140 ;170) au moins en partie thermofondu.

20. Article chaussant selon la revendication 19, **caractérisé en ce que** l'élément de semelle textile (173) est de construction textile unitaire avec le chausson principal textile (170).

21. Article chaussant selon l'une ou l'autre des revendications 18 et 19, **caractérisé en ce que** l'élément de semelle textile au moins en partie thermofondu (105 ;210) est une enveloppe textile comprenant une portion de semelle (106 ;220) et une portion périphérique d'enveloppement partiel du pied (108 ;230).

22. Article chaussant selon l'une quelconque des revendications 19 à 21, **caractérisé en ce qu'**il comprend un chausson auxiliaire textile (160 ;170) au moins en partie thermofondu et ayant un volume d'accueil du pied recevant, au moins en partie, le chausson principal textile (140 ;170).

23. Article chaussant selon l'une quelconque des revendications 19 à 22, **caractérisé en ce que** ledit élément de semelle textile comprend une matière textile thermofondue du chausson principal (80 ;120 ;140 ;170), et/ou une matière textile thermofondue du chausson auxiliaire (160 ;180).

## Patentansprüche

1. Herstellungsverfahren einer Sohlenstruktur (60; 100; 200), **dadurch gekennzeichnet, dass** es Folgendes umfasst:
(i) Bereitstellen mindestens eines textilen Sohlenelements (10; 30; 90; 130; 132; 134; 150; 152; 173), das eine Außenseite aufweist, umfassend einen oder mehrere teilweise wärmeschmelzbare Fäden;
(ii) Anordnen des textilen Sohlenelements (10; 30; 90; 130; 132; 134; 150; 152; 173) in einer Formstruktur (300), umfassend einen Sohlenabdruck (340);
(iii) Anordnen einer aufblasbaren Blase in der Formstruktur (300) und Aufblasen der aufblasbaren Blase, um die Außenseite des textilen Sohlenelements (10; 30; 90; 130; 132; 134; 150; 152; 173) direkt oder indirekt gegen den Sohlenabdruck (340) zu pressen, und Erhitzen des textilen Sohlenelements (10; 30; 90; 130; 132; 134; 150; 152; 173), um den oder die zumindest teilweise wärmeschmelzbaren Fäden zu schmelzen und den Sohlenabdruck (340) im Wesentlichen an die Außenseite des textilen Sohlenelements (10; 30; 90; 130; 132; 134; 150; 152; 173) zu formen,
(iv) Erlangen einer Sohlenstruktur (60; 100; 200), umfassend mindestens ein wärmekomprimiertes textiles Sohlenelement (70; 105; 210).

2. Herstellungsverfahren einer Sohlenstruktur (60; 100; 200) nach Anspruch 1, **dadurch gekennzeichnet, dass** das textile Sohlenelement (10) einen textilen Sohlenträger (12), der eine Außenseite (12b) aufweist, und einen oder mehrere textile Funktionsbereiche umfasst, die insbesondere beabstandet und lokalisiert an der Außenseite (12b) des textilen Sohlenträgers (12) angeordnet (20) sind.

3. Herstellungsverfahren einer Sohlenstruktur (60; 100; 200) nach Anspruch 2, **dadurch gekennzeichnet, dass** der/die textile(n) Funktionsbereich(e) (20) eine textile Tasche(n) ist/sind.

4. Herstellungsverfahren einer Sohlenstruktur (60; 100; 200) nach Anspruch 1, **dadurch gekennzeichnet, dass** das textile Sohlenelement (30) einen textilen Sohlenträger (40), der eine Außenfläche (40b) aufweist, und eine kontinuierliche oder diskontinuierliche Textilschicht (50), umfassend einen oder mehrere zumindest teilweise wärmeschmelzbare Fäden, angeordnet entlang der Außenseite (40b) des textilen Sohlenträgers (40), umfasst.

5. Herstellungsverfahren einer Sohlenstruktur (60; 100; 200) nach Anspruch 4, **dadurch gekennzeichnet, dass** die kontinuierliche oder diskontinuierliche Textilschicht (50) einen Abschnitt umfasst, der eine Stärke eᵢ in Schritt i) und eine Stärke e_{f} in Schritt iv) aufweist, wobei eᵢ von e_{f} verschieden ist.

6. Herstellungsverfahren einer Sohlenstruktur (60; 100; 200) nach einem der Ansprüche 1 bis 5, **dadurch gekennzeichnet, dass** das Verhältnis der Masse des wärmegeschmolzenen Materials aus dem oder den zumindest teilweise wärmeschmelzbare Fäden in dem mindestens einen textilen Sohlenelement (10; 30; 90; 130; 132; 134; 150; 152; 173) zu der Gesamtmasse des mindestens einen textilen Sohlenelements (10; 30; 90; 130; 132; 134; 150; 152; 173) größer als oder gleich wie 50 %, vorzugsweise größer als oder gleich wie 80 % ist.

7. Herstellungsverfahren einer Sohlenstruktur nach einem der Ansprüche 1 bis 6, **dadurch gekennzeichnet, dass** das textile Sohlenelement (10; 30; 90; 130; 132; 134; 150; 152; 173) eine einheitliche textile Konstruktion ist.

8. Herstellungsverfahren einer Sohlenstruktur (60; 100; 200) nach einem der Ansprüche 1 bis 7, **dadurch gekennzeichnet, dass** die Sohlenstruktur (60; 100; 200) eine Laufsohle ist, insbesondere die Laufsohle einen oder mehrere ganz oder teilweise wärmegeschmolzene textile Stollen (72; 110) umfasst.

9. Herstellungsverfahren eines Schuhwerks, **dadurch gekennzeichnet, dass** es die Durchführung des Herstellungsverfahrens einer Sohlenstruktur (60; 100; 200) nach einem der Ansprüche 1 bis 8 und die Bereitstellung eines textilen Hauptschuhs (80; 120; 140; 170) umfasst, umfassend einen oder mehrere zumindest teilweise wärmeschmelzbare Fäden, und dass der textile Hauptschuh einem Wärmeformungsschritt unterzogen wird, der insbesondere während des Schritts iii) oder unabhängig von Schritt iii) erfolgt.

10. Herstellungsverfahren eines Schuhwerks nach Anspruch 9, **dadurch gekennzeichnet, dass** das mindestens eine textile Sohlenelement (173) eine einheitliche textile Konstruktion mit dem textilen Hauptschuh (170) ist.

11. Herstellungsverfahren eines Schuhwerks nach Anspruch 9, **dadurch gekennzeichnet, dass** das mindestens eine textile Sohlenelement (90) eine textile Hülle ist, umfassend einen Sohlenabschnitt (91) und einen Umfangsabschnitt zum teilweisen Umhüllen des Fußes umfasst.

12. Herstellungsverfahren eines Schuhwerks nach einem der Ansprüche 9 bis 11, **dadurch gekennzeichnet, dass** es einen textilen Hilfsschuh (160; 180) umfasst, umfassend einen oder mehrere zumindest teilweise wärmeschmelzbare Fäden, die ein Aufnahmevolumen für den Fuß aufweisen, das zumindest teilweise den textilen Hauptschuh (140; 170) aufnimmt.

13. Herstellungsverfahren eines Schuhwerks nach einem der Ansprüche 9 bis 12, **dadurch gekennzeichnet, dass** die Sohlenstruktur in Schritt iv) ein wärmegeschmolzenes Textilmaterial des Hauptschuhs (80; 120; 140; 170), das zumindest teilweise wärmegeschmolzen ist, und/oder ein wärmegeschmolzenes Textilmaterial des Hilfsschuhs (160; 180), das zumindest teilweise wärmegeschmolzen ist, umfasst.

14. Sohlenstruktur (60; 100; 200) für ein Schuhwerk, das durch das Herstellungsverfahren einer Sohlenstruktur (60; 100; 200) nach einem der Ansprüche 1 bis 8 erlangbar ist, umfassend mindestens ein textiles Sohlenelement (70; 105; 210), das zumindest teilweise warmgeschmolzen ist und das eine Innenseite (60a; 160a; 220a) und eine Außenseite (60b; 160b; 220b) aufweist, die im Wesentlichen gegenüberliegend sind, die Außenseite (60b; 160b; 220b) des textilen Sohlenelements (70; 105; 210) umfassend einen Sohlenabdruck, **dadurch gekennzeichnet, dass** das textile Sohlenelement eine variable Stärke aufweist, dass der Sohlenabdruck mindestens einen negativen (74) oder positiven (72; 110) Abdruck umfasst, und dass die Innenseite (60a; 160a; 220a) des textilen Sohlenelements (70; 105; 210) mindestens einen Bereich (71) gegenüber dem negativen (74) oder positiven (72; 110) Abdruck umfasst, der im Wesentlichen eben ist und keine Aussparung oder Vertiefung umfasst.

15. Sohlenstruktur (60; 100; 200) nach Anspruch 14, **dadurch gekennzeichnet, dass** die Stärke (e₁) des textilen Sohlenelements (70; 105; 210) in einem Abschnitt (75), der einen positiven Abdruck (72) aufweist, größer ist als die Stärke (e₂) des textilen Sohlenelements (70; 105; 210) in einem Abschnitt (77), der einen negativen Abdruck (74) aufweist.

16. Sohlenstruktur (60; 105; 200) nach einem der Ansprüche 14 und 15, **dadurch gekennzeichnet, dass** das Verhältnis der Masse des in dem textilen Sohlenelement (70; 105; 210) thermogeschmolzenen Textilmaterials zu der Gesamtmasse des textilen Sohlenelements (70; 105; 210) größer als oder gleich wie 50 %, vorzugsweise größer als oder gleich wie 80 %, ist.

17. Sohlenaufbau (60; 105; 200) nach einem der Ansprüche 14 bis 16, **dadurch gekennzeichnet, dass** das textile Sohlenelement (70; 105; 200) eine Laufsohle (70; 105; 200) ist, optional umfassend einen oder mehrere textile Stollen (72; 110), die zumindest teilweise wärmegeschmolzen sind.

18. Schuhwerk, umfassend eine Sohlenstruktur (60; 105; 200) nach einem der Ansprüche 14 bis 17.

19. Schuhwerk nach Anspruch 18, **dadurch gekennzeichnet, dass** es einen textilen Hauptschuh (80; 120; 140; 170) umfasst, der zumindest teilweise wärmegeschmolzen ist.

20. Schuhwerk nach Anspruch 19, **dadurch gekennzeichnet, dass** das textile Sohlenelement (173) eine einheitliche textile Konstruktion mit dem textilen Hauptschuh (170) ist.

21. Schuhwerk nach einem der Ansprüche 18 und 19, **dadurch gekennzeichnet, dass** das zumindest teilweise wärmegeschmolzene textile Sohlenelement (105; 210) eine textile Hülle ist, umfassend einen Sohlenabschnitt (106; 220) und einen peripheren Abschnitt zum teilweisen Umhüllen des Fußes (108; 230).

22. Schuhwerk nach einem der Ansprüche 19 bis 21, **dadurch gekennzeichnet, dass** es einen textilen Hilfsschuh (160; 170) umfasst, der zumindest teilweise wärmegeschmolzen ist und ein Aufnahmevolumen für den Fuß aufweist, das zumindest teilweise den textilen Hauptschuh (140; 170) aufnimmt.

23. Schuhwerk nach einem der Ansprüche 19 bis 22, **dadurch gekennzeichnet, dass** das textile Sohlenelement ein wärmegeschmolzenes Textilmaterial des Hauptschuhs (80; 120; 140; 170) und/oder ein wärmegeschmolzenes Textilmaterial des Hilfsschuhs (160; 180) umfasst.

## Claims

1. A method for manufacturing a sole structure (60; 100; 200), **characterized in that** it comprises:
(i) providing at least one textile sole element (10; 30; 90; 130; 132; 134; 150; 152; 173) having an external face, comprising one or several at least partly hot-meltable yarn(s);
(ii) disposing the textile sole element (10; 30; 90; 130; 132; 134; 150; 152; 173) in a mold structure (300) comprising a sole cavity (340);
(iii) disposing an inflatable bladder in the mold structure (300), and inflating the inflatable bladder to press, directly or indirectly, the external face of the textile sole element (10; 30; 90; 130; 132; 134; 150; 152; 173) against the sole cavity (340), and heating the textile sole element (10; 30; 90; 130; 132; 134; 150; 152; 173) in order to melt the at least partly hot-meltable yarn(s) and substantially mold the sole cavity (340) on the external face of the textile sole element (10; 30; 90; 130; 132; 134; 150; 152; 173);
(iv) obtaining a sole structure (60; 100; 200) comprising at least one thermo-compressed textile sole element (70; 105; 210).

2. The method for manufacturing a sole structure (60; 100; 200) according to claim 1, **characterized in that** the textile sole element (10) comprises a textile sole support (12) having an external face (12b), and one or several textile functional region(s) (20) disposed, particularly in a spaced and located manner, on the external face (12b) of the textile sole support (12).

3. The method for manufacturing a sole structure (60; 100; 200) according to claim 2, **characterized in that** the textile functional region(s) (20) is/are one or several textile pocket(s).

4. The method for manufacturing a sole structure (60; 100; 200) according to claim 1, **characterized in that** the textile sole element (30) comprises a textile sole support (40) having a external face (40b), and a continuous or discontinuous textile layer (50), comprising one or several at least partly hot-meltable yarn(s), disposed along the external face (40b) of the textile sole support (40).

5. The method for manufacturing a sole structure (60; 100; 200) according to claim 4, **characterized in that** the continuous or discontinuous textile layer (50), comprises a section having a thickness eᵢ in step i) and a thickness e_{f} in step iv), eᵢ being different from e_{f}.

6. The method for manufacturing a sole structure (60; 100; 200) according to any one of claims 1 to 5, **characterized in that** the ratio of the mass of the hot melted material derived from the at least partly hot-meltable yarn(s) in said at least one textile sole element (10; 30; 90; 130; 132; 134; 150; 152; 173) to the total mass of said at least one textile sole element (10; 30; 90; 130; 132; 134; 150; 152; 173) is greater than or equal to 50%, preferably greater than or equal to 80%.

7. The method for manufacturing a sole structure according to any one of claims 1 to 6, **characterized in that** the textile sole element (10; 30; 90; 130; 132; 134; 150; 152; 173) is of unitary textile construction.

8. The method for manufacturing a sole structure (60; 100; 200) according to any one of claims 1 to 7, **characterized in that** the sole structure (60; 100; 200) is an outsole, particularly the outsole comprises one or several fully or partly hot melted textile studs (72; 110).

9. A method for manufacturing a footwear, **characterized in that** it comprises the implementation of the method for manufacturing a sole structure (60; 100; 200) according to any one of claims 1 to 8, and the provision of a main textile bootie (80; 120; 140; 170) comprising one or several at least partly hot-meltable yarn(s), and **in that** the main textile bootie undergoes a thermoforming step, in particular taking place during step iii) or independently of step iii).

10. The method for manufacturing a footwear according to claim 9, **characterized in that** said at least one textile sole element (173) is of unitary textile construction with the main textile bootie (170).

11. The method for manufacturing a footwear according to claim 9, **characterized in that** said at least one textile sole element (90) is a textile envelope comprising a sole portion (91) and a peripheral portion for partially wrapping the foot.

12. The method for manufacturing a footwear according to any one of claims 9 to 11, **characterized in that** it comprises an auxiliary textile bootie (160; 180) comprising one or several at least partly hot-meltable yarn(s) having a volume for accommodating the foot receiving, at least partly, the main textile bootie (140; 170).

13. The method for manufacturing a footwear according to any one of claims 9 to 12, **characterized in that** the sole structure in step iv) comprises a hot melted textile material of the at least partly hot melted main bootie (80; 120; 140; 170), and/or a hot melted textile material of the at least partly hot melted auxiliary bootie (160; 180).

14. A sole structure (60; 100; 200) for a footwear, capable of being obtained by the method for manufacturing a sole structure (60; 100; 200) according to any one of claims 1 to 8, comprising at least one at least partly hot melted textile sole element (70; 105; 210), having substantially opposite internal (60a; 160a; 220a) and external (60b; 160b; 220b) faces, the external face (60b; 160b; 220b) of the textile sole element (70; 105; 210) comprises a sole cavity, **characterized in that** said textile sole element has a variable thickness, **in that** the sole cavity comprises at least one negative (74) or positive (72; 110) cavity, and **in that** the internal face (60a; 160a; 220a) of the textile sole element (70; 105; 210) comprises at least one region (71) facing said negative (74) or positive (72; 110) cavity which is substantially planar and does not comprise any recess or hollow.

15. The sole structure (60; 100; 200) according to claim 14, **characterized in that** the thickness (e₁) of the textile sole element (70; 105; 210) in a section (75) comprising a positive cavity (72) is greater than the thickness (e₂) of the textile sole element (70; 105; 210) in a section (77) comprising a negative cavity (74).

16. The sole structure (60; 105; 200) according to either one of claims 14 and 15, **characterized in that** the ratio of the mass of the hot melted textile material in the textile sole element (70; 105; 210) to the total mass of the textile sole element (70; 105; 210) is greater than or equal to 50%, preferably greater than or equal to 80%.

17. The sole structure (60; 105; 200) according to any one of claims 14 to 16, **characterized in that** the textile sole element (70; 105; 200) is an outsole (70; 105; 200), optionally comprising one or several at least partly hot melted textile stud(s) (72; 110).

18. A footwear comprising a sole structure (60; 105; 200) according to any one of claims 14 to 17.

19. The footwear according to claim 18, **characterized in that** it comprises an at least partly hot melted main textile bootie (80; 120; 140; 170).

20. The footwear according to claim 19, **characterized in that** the textile sole element (173) is of unitary textile construction with the main textile bootie (170).

21. The footwear according to either of claims 18 and 19, **characterized in that** the at least partly hot melted textile sole element (105; 210) is a textile envelope comprising a sole portion (106; 220) and a peripheral portion for partially wrapping the foot (108; 230).

22. The footwear according to any one of claims 19 to 21, **characterized in that** it comprises an at least partly hot melted auxiliary textile bootie (160; 170) and having a volume for accommodating the foot receiving, at least partly, the main textile bootie (140; 170).

23. The footwear according to any one of claims 19 to 22, **characterized in that** said textile sole element comprises a hot melted textile material of the main bootie (80; 120; 140; 170), and/or a hot melted textile material of the auxiliary bootie (160; 180).
